(19) Europäisches Patentamt
European Patent Office
Office européen des brevets

(11) **EP 3 204 280 B1**

(12) **FASCICULE DE BREVET EUROPEEN**

(45) Date de publication et mention
de la délivrance du brevet:
**28.11.2018 Bulletin 2018/48**

(51) Int Cl.:
***B62D 15/02*** *(2006.01)*      ***B60W 50/04*** *(2006.01)*
***B62D 5/04*** *(2006.01)*      ***B62D 6/00*** *(2006.01)*

(21) Numéro de dépôt: **15786998.3**

(22) Date de dépôt: **01.10.2015**

(86) Numéro de dépôt international:
**PCT/FR2015/052628**

(87) Numéro de publication internationale:
**WO 2016/055719 (14.04.2016 Gazette 2016/15)**

(54) **SÉCURISATION D'UNE FONCTION D'AIDE À LA CONDUITE AU SEIN D'UNE DIRECTION ASSISTÉE**

SICHERSTELLUNG DER SICHERHEIT EINER FAHRHILFEFUNKTION IN EINEM SERVOLENKSYSTEM

ENSURING THE SAFETY OF A DRIVING AID FUNCTION WITHIN A POWER STEERING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.10.2014 FR 1459590**

(43) Date de publication de la demande:
**16.08.2017 Bulletin 2017/33**

(73) Titulaire: **JTEKT Europe**
**69540 Irigny (FR)**

(72) Inventeur: **MORETTI, Romain**
**69510 Thurins (FR)**

(74) Mandataire: **Chevalier, Renaud Philippe et al**
**Cabinet Germain & Maureau**
**BP 6153**
**69466 Lyon Cedex 06 (FR)**

(56) Documents cités:
EP-A1- 2 141 057      DE-A1-102013 204 842
JP-A- 2013 079 875    US-A1- 2013 274 985

**Description**

La présente invention concerne les procédés de gestion de directions assistées de véhicules automobile, et plus particulièrement les procédés de gestion de directions assistées comprenant des fonctions d'aides à la conduite, destinées à assurer automatiquement un asservissement en trajectoire du véhicule, telles que par exemple les fonctions d'aide au maintien du véhicule dans sa voie de circulation (« lane keeping »).

Le document EP2141057A1 est considéré comme l'art antérieur le plus proche selon les caractéristiques du préambule des revendications 1 et 10.

Les fonctions d'aide à la conduite permettant d'asservir automatiquement la trajectoire d'un véhicule automobile tendent actuellement à se multiplier, afin d'améliorer la sécurité et le confort des utilisateurs de véhicules automobiles.

Cependant, dans la mesure où de telles fonctions d'asservissement en trajectoire assurent de manière autonome un véritable pilotage automatique du véhicule concerné, en commandant d'elles-mêmes la configuration de la direction qui permettra de suivre une trajectoire de référence déterminée par leurs soins, il est essentiel, pour la sécurité des occupants du véhicule et celle des autres usagers de la route, que de telles fonctions respectent des normes de sécurité particulièrement élevées.

A cet effet, la norme de sécurité ISO-26262 propose de définir, à partir d'une analyse des risques, des niveaux de sécurité «ASIL» («Automotive Safety Integrity Level »), notés, du plus faible au plus exigeant, « QM » (« Quality Management », c'est-à-dire non pertinent pour la sécurité), puis « A », « B », « C » et enfin « D », et qui sont déterminés en caractérisant chaque situation dangereuse (ou « évènement dangereux ») possible par trois paramètres :

- sa sévérité, c'est-à-dire le degré de gravité des blessures susceptibles d'être infligées à l'occupant du véhicule (de S0 pour l'absence de blessure à S3 pour une blessure critique ou mortelle) ;
- son exposition, c'est-à-dire la fréquence prévisible d'apparition de conditions de fonctionnement dans lesquelles une blessure est susceptible de se produire (depuis une probabilité quasi-nulle E0, ou très faible E1, selon laquelle la blessure ne se produit que dans de rares conditions de fonctionnement, jusqu'à une probabilité élevée E4, dans laquelle il est quasiment certain qu'une blessure se produise dans la majorité des conditions de fonctionnement), et
- sa contrôlabilité, c'est-à-dire la probabilité que le conducteur puisse agir (ou réagir) pour contrôler la situation et éviter la blessure (depuis une situation généralement contrôlable C0 à une situation difficilement contrôlable voire totalement incontrôlable C3).

Le niveau ASIL dépend de la combinaison (du produit) de ces trois paramètres.

Ainsi, à titre d'exemple, un évènement dangereux causant des blessures critiques S3, à forte probabilité d'occurrence E4, et incontrôlable C3, relèvera du niveau ASIL D (le plus élevé).

En revanche, le même évènement incontrôlable C3 et causant des blessures critiques S3, mais présentant une probabilité d'occurrence moindre, inférieure d'un ou plusieurs degré(s) au degré maximum, verra son niveau ASIL abaissé d'un ou plusieurs degrés en conséquence. Dans cet exemple, le niveau ASIL sera ainsi ramené à C dans le cas d'une exposition E3, voire à A dans le cas d'une exposition E1.

En pratique les fonctions d'asservissement en trajectoire doivent répondre à (être certifiées pour) un niveau de sécurité ASIL au moins égal à B, à C, voire à D.

Ceci impose de fiabiliser non seulement l'acquisition des données qui sont nécessaires à la régulation automatique, mais également les algorithmes de traitement de ces données, et ce sur toute la chaîne d'asservissement en trajectoire.

Une telle exigence de sécurité impose donc tout d'abord d'utiliser des capteurs relativement élaborés, tels que des caméras rapides à haute définition permettant de suivre précisément le marquage au sol délimitant la voie de circulation, et de surcroît de mettre généralement en oeuvre une pluralité de capteurs redondants concourant à la même fonction, afin de pouvoir gagner en précision et/ou maintenir la fonction malgré la défaillance éventuelle (temporaire ou définitive) de l'un desdits capteurs.

Ceci tend naturellement à augmenter le coût et le poids du dispositif de gestion de direction embarqué sur le véhicule.

Cette même exigence de sécurité nécessite ensuite de prévoir, sur toute la chaîne d'asservissement, des algorithmes de traitement complexes, pourvus notamment de fonctions d'analyse détaillée (par exemple de traitement rapide d'images), de fonctions de filtrage de bruit destinées à améliorer la qualité des signaux perçus, de fonctions de sécurité destinées à identifier et traiter d'éventuelles défaillances dans la chaîne d'acquisition ou la chaîne de calcul, ou bien encore de fonctions de vérification redondantes, destinées à calculer, vérifier et/ou valider un même résultat par plusieurs calculs différents et/ou en utilisant plusieurs types d'informations provenant de sources distinctes, et ce afin de garantir la sécurité du fonctionnement de l'ensemble même en cas d'erreur de mesure affectant un signal ou en cas de défaillance de l'une des fonctions.

Or, la complexité de tels algorithmes rend leur exécution relativement gourmande en ressources de calcul et en énergie, mais également et surtout assez lente, alors que, justement, les fonctions d'aide à la conduite nécessitent parfois un temps de réponse très court, notamment pour assurer un asservissement en trajectoire alors que le véhicule se déplace à grande vitesse (typiquement pour le suivi d'une voie de circulation sur autoroute).

Les objets assignés à l'invention visent par conséquent à remédier aux inconvénients susmentionnés et à proposer un nouveau procédé de gestion de direction assistée qui concilie, à moindre coût et sans alourdir le véhicule, des exigences de sécurité élevées avec de bonnes performances en matière de temps de réponse.

Les objets assignés à l'invention sont atteints au moyen d'un procédé de gestion d'une direction assistée de véhicule comprenant au moins une fonction d'asservissement en trajectoire, selon laquelle on ajuste automatiquement une consigne moteur que l'on applique à un moteur d'assistance de la direction assistée de manière à ce que le véhicule suive une trajectoire réelle qui se rapproche de, voire qui coïncide avec, une trajectoire de référence que l'on souhaite faire suivre au véhicule, ledit procédé comprenant plus préférentiellement une fonction d'asservissement en trajectoire selon laquelle on détermine automatiquement une consigne de position d'après une trajectoire de référence que l'on souhaite faire suivre au véhicule puis l'on ajuste automatiquement une consigne moteur que l'on applique au moteur d'assistance de manière à faire converger la position effective de la direction assistée vers ladite consigne de position, ledit procédé étant caractérisé en ce qu'il comprend une fonction de sécurisation, distincte de la fonction d'asservissement en trajectoire et qui répond à un niveau de sécurité ASIL plus élevé que ladite fonction d'asservissement en trajectoire d'après la norme de sécurité ISO-26262, ladite fonction de sécurisation comprenant une sous-fonction de diagnostic selon laquelle on surveille un paramètre de contrôle, représentatif du comportement du véhicule, tel qu'une mesure ou une estimation de la position angulaire du volant de conduite, une mesure ou une estimation du couple conducteur exercé par le conducteur sur le volant de conduite, ou une mesure ou une estimation de la vitesse angulaire de rotation du volant de conduite, afin de détecter, par comparaison dudit paramètre de contrôle avec un seuil d'alerte prédéterminé, l'apparition d'une situation d'alerte prédéfinie, considérée comme dangereuse, la fonction de sécurisation comprenant ensuite une sous-fonction d'intervention selon laquelle, en cas de détection d'une situation d'alerte, on force la modération et/ou la neutralisation de la fonction d'asservissement en trajectoire.

Avantageusement, l'invention propose de dissocier la fonction de sécurisation de la fonction d'asservissement en trajectoire, ce qui permet de faire supporter la contrainte du niveau de sécurité élevé par la seule fonction de sécurisation, tandis que la fonction d'asservissement en trajectoire est en elle-même libérée d'une telle contrainte de sécurité.

En effet, il n'est plus nécessaire de sécuriser intrinsèquement les signaux acquis ou utilisés par la fonction d'asservissement en trajectoire, ni les algorithmes de traitement mis en oeuvre par ladite fonction d'asservissement en trajectoire, puisque ce rôle de sécurisation incombe entièrement à la fonction de sécurisation.

A cet effet, la fonction de sécurisation, dont l'exécution se déroule en parallèle et indépendamment du déroulement normal de la fonction d'asservissement en trajectoire, surveille le comportement du véhicule, au moyen d'une branche d'acquisition de données et de calcul spécifiquement dédiée et sécurisée, distincte de la branche de l'asservissement en trajectoire, afin de détecter l'apparition éventuelle d'une situation d'alerte jugée dangereuse, et réagit, en cas de situation d'alerte, en modérant voire en neutralisant la fonction d'asservissement en trajectoire, c'est-à-dire en atténuant, voire en bloquant ou en annulant l'influence de ladite fonction d'asservissement trajectoire sur la détermination et l'ajustement du comportement de la direction assistée, et plus particulièrement en atténuant, voire en bloquant ou en annulant l'influence de ladite fonction d'asservissement trajectoire sur l'ajustement de la consigne moteur qui est appliquée au moteur d'assistance.

En d'autres termes, l'invention propose d'assurer la sécurité de l'ensemble du procédé de gestion par une fonction de sécurisation qui tourne en « tâche de fond », qui repose sur son ou ses propres signaux (le paramètre de contrôle), sécurisés au niveau ASIL souhaité, et ses propres algorithmes de traitement, sécurisés au niveau ASIL souhaité, et qui intervient, lorsqu'elle l'estime nécessaire pour maintenir la sécurité des occupants du véhicule, en prenant alors la priorité sur la fonction d'asservissement en trajectoire afin de neutraliser $a$ $posteriori$ ladite fonction d'asservissement en trajectoire, en "fin de chaîne" (un peu à la manière d'un coupe-circuit qui interrompt le ou les signaux de consigne qui proviennent de ladite fonction d'asservissement en trajectoire et qui sont destiné(s) à ajuster la consigne moteur, quelle que soit du reste la valeur dudit ou desdits signaux de consigne élaborés par ladite fonction d'asservissement en trajectoire).

Avantageusement, la sécurisation d'une partie seulement des processus mis à l'oeuvre dans le procédé de gestion de la direction assistée selon l'invention suffit donc à sécuriser, au niveau ASIL requis, l'ensemble dudit procédé de gestion.

En pratique, il suffit donc de conférer le niveau de sécurité ASIL souhaité à la (seule) fonction de sécurisation, en sécurisant audit niveau ASIL l'acquisition du paramètre de contrôle et le traitement dudit paramètre de contrôle qui permet la détection d'une situation dangereuse, pour obtenir globalement une sécurisation complète, certifiée à ce même niveau ASIL fixé par la fonction de sécurisation, de la fonction d'asservissement en trajectoire qui est surveillée, et ainsi "protégée", par ladite fonction de sécurisation.

De ce fait, grâce à l'architecture de gestion proposée par l'invention, la fonction d'asservissement en trajectoire peut présenter une structure simple et peu onéreuse, non redondante, qui utilisera par exemple des capteurs bon marché, légers, et compacts, ainsi que des algorithmes de calcul peu complexes et donc particulièrement rapides et peu gourmands en ressources de calcul.

Avantageusement, grâce à la séparation des rôles, la fonction d'asservissement en trajectoire peut se concentrer sur les performances, notamment dynamiques (l'asservissement en trajectoire présentant alors un temps de réponse particulièrement court), peu important son niveau de sécurité intrinsèque, tandis que la fonction de sécurisation veille, en tâche de fond, à imposer globalement un niveau de sécurité suffisant à l'ensemble.

En d'autres termes, l'invention permet d'allier la simplicité et la rapidité d'exécution d'une fonction principale d'asservissement en trajectoire (relativement simplifiée) avec la sûreté de fonctionnement procurée par une fonction auxiliaire de sécurisation isolée, capable d'intervenir, lorsque cela est nécessaire, pour priver d'effet ladite fonction principale d'asservissement en trajectoire, afin d'éviter toute dérive dangereuse et incontrôlable du pilotage automatique du véhicule.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

La figure 1 illustre, selon un schéma-bloc, le principe général de mise en oeuvre d'un procédé selon l'invention.

La figure 2 illustre, selon un schéma-bloc, le détail d'un premier exemple de réalisation d'une fonction de sécurisation conforme à l'invention.

La figure 3 illustre, selon un schéma-bloc, le détail d'un second exemple de réalisation d'une fonction de sécurisation conforme à l'invention.

La figure 4 illustre, selon un schéma-bloc, un troisième exemple de réalisation d'une fonction de sécurisation conforme à l'invention.

La figure 5 illustre le principe de commutation à hystérésis d'un filtre adaptatif utilisable pour réduire le bruit affectant la mesure d'un paramètre de contrôle utilisé par un procédé selon l'invention, notamment au sein du troisième exemple de mise en oeuvre représenté sur la figure 4.

La présente invention se rapporte à un procédé de gestion d'une direction assistée de véhicule, et plus particulièrement de véhicule automobile.

De façon connue en soi, ladite direction assistée, et plus particulièrement le mécanisme de ladite direction assistée, comprend au moins un volant de conduite 1, permettant au conducteur d'agir sur la direction pour en commander manuellement la manoeuvre de braquage.

La direction assistée comprend également au moins un moteur d'assistance 2, destiné à fournir un effort, et plus particulièrement un couple, d'assistance à la manoeuvre de la direction.

On peut indifféremment envisager tout type de moteur d'assistance 2, et plus particulièrement tout type de moteur d'assistance à double sens de fonctionnement, et notamment un moteur d'assistance rotatif ou un moteur d'assistance linéaire.

Par ailleurs, ledit moteur d'assistance 2 peut être par exemple hydraulique, ou bien, de préférence, électrique (l'utilisation d'un moteur électrique facilitant notamment l'implantation et la mise en oeuvre dudit moteur, ainsi que la génération et la gestion des signaux utiles).

De façon particulièrement préférentielle, le moteur d'assistance 2 sera un moteur électrique rotatif, par exemple de type « brushless ».

Par ailleurs, la direction assistée comprend de préférence, de manière connue en soi, une colonne de direction 3, entraînée par le volant de conduite 1 et qui engrène, au moyen d'un pignon, sur une crémaillère de direction (non représentée) montée coulissante dans un carter de direction solidaire du châssis du véhicule.

Les extrémités de la crémaillère de direction sont de préférence reliées chacune, par l'intermédiaire d'une biellette de direction, à un porte-fusée orientable en lacet, sur lequel est monté une roue directrice (et préférentiellement motrice) du véhicule, de telle manière que le déplacement de la crémaillère en translation dans le carter provoque une modification de l'angle de braquage (i.e. de l'orientation en lacet) desdites roues directrices.

Le moteur d'assistance 2 pourra notamment venir en prise sur la colonne de direction 3, par exemple par l'intermédiaire d'un réducteur à roue tangente et vis sans fin, ou bien encore venir en prise directement sur la crémaillère de direction, par un mécanisme d'entraînement de type vis à billes ou bien *via* un pignon moteur distinct du pignon de la colonne de direction (pour former alors un mécanisme de direction dit « à double pignon »).

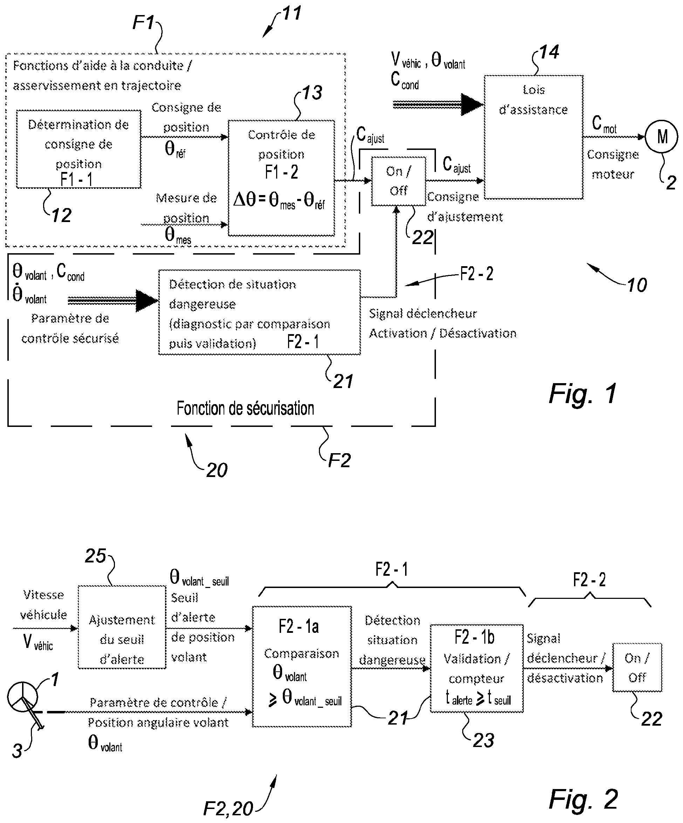

Selon l'invention, et tel que cela est illustré sur la figure 1, le procédé comprend au moins une fonction F1 d'asservissement en trajectoire, selon laquelle on ajuste automatiquement une consigne moteur $C_{mot}$ que l'on applique au moteur d'assistance 2 de manière à ce que le véhicule suive automatiquement une trajectoire réelle qui se rapproche de, voire qui coïncide avec, une trajectoire de référence que l'on souhaite faire suivre au véhicule, et plus particulièrement selon laquelle on détermine automatiquement une consigne de position $\theta_{réf}$ d'après une trajectoire de référence que l'on souhaite faire suivre au véhicule, puis l'on ajuste automatiquement une consigne moteur $C_{mot}$ que l'on applique au moteur d'assistance 2 de manière à faire converger la position effective $\theta_{mes}$ de la direction vers ladite consigne de position $\theta_{réf}$.

La fonction d'asservissement en trajectoire F1 pourra notamment être une fonction de pilotage automatique de manoeuvre de stationnement (généralement connue sous le nom de « park assist »), en particulier de manoeuvre de stationnement en marche arrière, et plus particulièrement une fonction de pilotage automatique pour la réalisation de créneaux, ou bien encore, de façon particulièrement préférentielle, une fonction de pilotage automatique de suivi d'une voie de circulation (généralement connue sous le nom de « lane keeping »).

Dans ce qui suit, il sera donc fait référence, par commodité de description, à une telle fonction de suivi de voie de circulation (« lane keeping »).

La consigne de position $\theta_{\text{réf}}$ appliquée à un instant considéré correspondra à une position-cible, calculée par une sous-fonction F1-1 de détermination de consigne de position, et dans laquelle doit se placer le mécanisme de direction pour que le véhicule puisse, dans la situation de vie dans laquelle il se trouve, adopter un angle de braquage des roues directrices qui permette au véhicule de suivre une trajectoire réelle qui se rapproche le plus possible (dans une marge de tolérance prédéfinie), et idéalement qui coïncide, avec la trajectoire de référence prédéterminée.

En d'autres termes, la fonction de l'asservissement en trajectoire sera d'assurer un pilotage automatique du véhicule permettant de garder la trajectoire réelle du véhicule au voisinage de la trajectoire (idéale) de référence, en opérant en temps réel les corrections de trajectoire (et donc les ajustements de consigne de position) nécessaires.

En pratique, la consigne de position $\theta_{\text{réf}}$ sera donc variable dans le temps, en signe (gauche/droite) comme en intensité (amplitude de l'angle de braquage), selon la trajectoire de référence visée et les corrections opérées.

La trajectoire de référence sera avantageusement construite automatiquement à partir, entre autres, de données relatives à des paramètres extérieurs liés à l'environnement du véhicule, tels que la distance séparant une partie du véhicule d'un obstacle externe (par exemple un autre véhicule en stationnement) ou bien la position relative du véhicule par rapport à un repère extérieur, par exemple par rapport à une ligne de séparation de voies de circulation.

Ces données pourront être acquises, sensiblement en temps réel, par toute mesure appropriée, réalisée par exemple au moyen de capteurs sans contact (caméras, capteurs optiques, capteurs ultrasonores, etc.).

Ainsi, par exemple, la surveillance de la voie de circulation, et donc la définition (construction) de la trajectoire de référence (ou des corrections de trajectoire) correspondant au tracé de ladite voie de circulation, que ledit tracé soit du reste rectiligne ou incurvé, pourra être réalisée au moyen de caméras aptes à détecter le marquage de limite de voie de circulation et à mesurer la position du véhicule par rapport audit marquage.

Les informations fournies par les données recueillies permettront de déterminer la situation du véhicule dans son environnement (position, orientation, vitesse, etc.) à l'instant considéré, et ainsi de proposer, dans un référentiel externe au véhicule, une trajectoire (ou des corrections de trajectoire) adaptées à la fois audit environnement, à la dynamique du véhicule (déterminée notamment en fonction de la vitesse longitudinale, des efforts exercés sur la crémaillère et/ou de paramètres de dynamique latérale tels que la vitesse de lacet ou l'accélération latérale), ainsi que, bien entendu, à l'opération de pilotage automatique visée.

La position effective (instantanée) $\theta_{\text{mes}}$ de la direction assistée pourra être obtenue par toute mesure au moyen d'un capteur de position approprié, par exemple par une mesure de la position linéaire de la crémaillère, ou bien encore, de préférence, par une mesure de la position angulaire $\theta_{\text{volant}}$ du volant de conduite 1 (dite aussi « position volant » ou « angle volant »), ou bien, de manière équivalente, en connaissant le rapport de réduction mécanique de la chaîne cinématique qui relie le moteur d'assistance 2 audit volant de conduite 1, par une mesure de la position angulaire de l'arbre du moteur d'assistance 2.

Le cas échéant, la position angulaire de l'arbre du moteur d'assistance 2 pourra être déterminée au moyen d'un capteur de type « resolver », de préférence intégré au moteur d'assistance.

Tel que cela est illustré sur la figure 1, la fonction d'asservissement en trajectoire F1 comprendra une sous-fonction dite « de contrôle de position » F1-2, qui permettra d'élaborer, à partir de la connaissance de la consigne de position $\theta_{\text{réf}}$ et de la position effective de la direction $\theta_{\text{mes}}$, une consigne d'ajustement $C_{\text{ajust}}$ qui permettra l'ajustement de la consigne moteur $C_{\text{mot}}$.

En pratique, le procédé pourra être mis en oeuvre par un module de gestion 10 de direction assistée.

Ledit module de gestion 10 pourra à cet effet comprendre une (première) branche d'asservissement en trajectoire 11 qui comporte une unité de détermination d'une consigne de position 12 pour définir une trajectoire de référence que l'on souhaite faire suivre au véhicule, une unité suiveuse 13 qui calcule l'écart $\Delta\theta$ entre la trajectoire réelle du véhicule et la trajectoire de référence afin d'émettre en sortie une consigne d'ajustement $C_{\text{ajust}}$ qui est utilisée en entrée d'une unité de calcul de consigne moteur 14 qui émet à son tour une consigne moteur $C_{\text{mot}}$ à destination d'un moteur d'assistance 2, de telle manière que la consigne d'ajustement $C_{\text{ajust}}$ puisse être prise en considération pour ajuster la consigne moteur $C_{\text{mot}}$ appliquée au moteur d'assistance 2 afin de réduire l'écart $\Delta\theta$ entre la trajectoire réelle du véhicule et la trajectoire de référence.

Plus particulièrement, ledit module de gestion 10 pourra à cet effet comprendre une (première) branche d'asservissement en trajectoire 11 qui comporte une unité de détermination d'une consigne de position 12 pour définir une consigne de position $\theta_{\text{réf}}$ de la direction à partir d'une trajectoire de référence que l'on souhaite faire suivre au véhicule, une unité suiveuse 13 qui calcule, selon une sous-fonction F1-2 dite « de contrôle de position », l'écart $\Delta\theta = \theta_{\text{mes}} - \theta_{\text{réf}}$ (on conserve la même convention de notation $\Delta\theta$ que dans le paragraphe précédent, par commodité de description) entre la position effective $\theta_{\text{mes}}$ de la direction et ladite consigne de position $\theta_{\text{réf}}$ afin

d'émettre en sortie une consigne d'ajustement $C_{ajust}$ = $f(\Delta\theta)$ qui est utilisée en entrée d'une unité de calcul de consigne moteur 14 qui émet à son tour, selon des lois d'assistance prédéterminées, une consigne moteur $C_{mot}$ à destination d'un moteur d'assistance 2, de telle manière que la consigne d'ajustement $C_{ajust}$ puisse être prise en considération pour ajuster la consigne moteur $C_{mot}$ appliquée au moteur d'assistance 2 afin de réduire l'écart $\Delta\theta$ entre la position effective de la direction et la consigne de position (et idéalement faire converger cet écart vers zéro).

Cette première branche 11 permettra donc, le cas échéant, de réaliser un asservissement en trajectoire de type boucle fermée.

De façon connue en soi, les lois d'assistance utilisées par l'unité de calcul de consigne moteur 14 pourront prendre en considération différents signaux d'entrée, tel que l'angle volant (position angulaire du volant) $\theta_{volant}$, la vitesse longitudinale $V_{véhic}$ du véhicule, et/ou le couple conducteur $C_{cond}$, par exemple pour définir, de façon conventionnelle, un effort d'assistance, destiné à amplifier l'effort manuel fourni par le conducteur afin de faciliter une manoeuvre (manuelle) de braquage.

Selon une variante de mise en oeuvre particulièrement préférée, l'unité de calcul de consigne moteur 14 sera agencée pour permettre un asservissement (de type boucle fermée) en couple conducteur, selon lequel on mesure le couple conducteur effectif $C_{cond}$ qui est réellement exercé, à l'instant considéré, par le conducteur sur le volant de conduite 1, puis l'on compare ledit couple conducteur effectif $C_{cond}$ à une consigne de couple conducteur $C_{cond\_réf}$ prédéterminée afin d'évaluer un écart de couple conducteur qui correspond à la différence entre ladite consigne de couple conducteur $C_{cond\_réf}$ et le couple conducteur effectif $C_{cond}$, puis l'on détermine, à partir de cet écart de couple conducteur, une consigne de couple moteur $C_{mot}$ destinée à être appliquée au moteur d'assistance 2 en vue de réduire ledit écart de couple conducteur.

Selon une telle variante de mise en oeuvre, la consigne d'ajustement $C_{ajust}$ pourra former (lorsque la fonction d'asservissement en trajectoire F1 est active) la consigne de couple conducteur $C_{cond\_réf}$ susmentionnée, utilisée en entrée de l'unité de calcul de consigne moteur 14 (c'est-à-dire que $C_{ajust} = C_{cond\_réf}$), ce qui permettra à la fonction d'asservissement en trajectoire F1 de piloter automatiquement (et activement) la fonction d'asservissement en couple conducteur.

Selon l'invention, le procédé comprend une fonction de sécurisation F2, distincte de la fonction d'asservissement en trajectoire F1 et qui répond à un niveau de sécurité ASIL plus élevé que ladite fonction d'asservissement en trajectoire d'après la norme de sécurité ISO-26262.

Ladite fonction de sécurisation F2 comprend une sous-fonction F2-1 de diagnostic selon laquelle on surveille un paramètre de contrôle $\theta_{volant}$, $C_{cond}$, $\dot\theta_{volant}$, paramètre de contrôle qui est représentatif du comportement véhicule, et qui est « sécurisé » à un niveau ASIL égal ou supérieur à celui (globalement) requis pour la fonction de sécurisation F2.

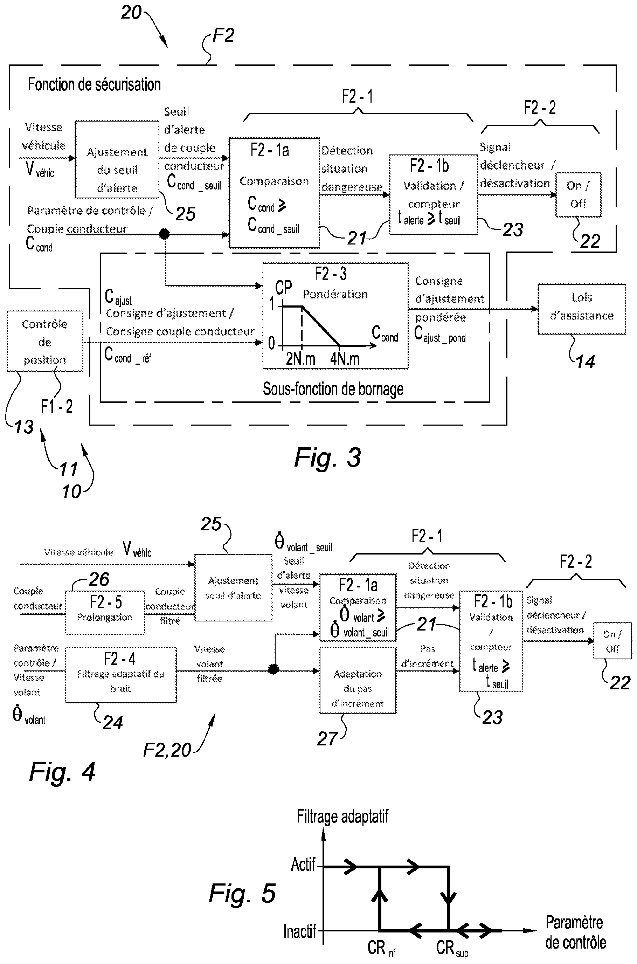

Ledit paramètre de contrôle peut être par exemple une mesure ou une estimation de la position angulaire $\theta_{volant}$ du volant de conduite (notamment dans le premier exemple de la figure 2), une mesure ou une estimation du couple conducteur $C_{cond}$ (dit aussi « couple volant ») exercé par le conducteur sur le volant de conduite 1 (notamment dans le second exemple de la figure 3), ou une mesure ou une estimation de la vitesse angulaire $\dot\theta_{volant}$, de rotation du volant de conduite (notamment dans le troisième exemple de la figure 4).

Avantageusement, la sous-fonction F2-1 de diagnostic permet de surveiller le paramètre de contrôle afin de détecter, par comparaison dudit paramètre de contrôle (de préférence considéré en valeur absolue) avec un seuil d'alerte prédéterminé, ici $\theta_{volant\_seuil}$, $C_{cond\_seuil}$, ou $\dot\theta_{volant\_seuil}$ respectivement, l'apparition d'une situation d'alerte prédéfinie, considérée comme dangereuse.

La fonction de sécurisation F2 comprend ensuite une sous-fonction d'intervention F2-2 selon laquelle, en cas de détection d'une situation d'alerte, on force la modération et/ou la neutralisation de la fonction d'asservissement en trajectoire F1.

En pratique, tel que cela est illustré sur la figure 1, le module de gestion 10 pourra comprendre à cet effet une (seconde) branche de sécurisation 20, formant une ramification qui est distincte de la branche d'asservissement en trajectoire 11 et dont le niveau de sécurité ASIL est plus élevé que celui de ladite branche d'asservissement en trajectoire d'après la norme de sécurité ISO-26262, ladite branche de sécurisation 20 comprenant une unité de diagnostic 21 qui reçoit en entrée un paramètre de contrôle (sécurisé) $\theta_{volant}$, $C_{cond}$, $\dot\theta_{volant}$, représentatif du comportement véhicule, tel qu'une mesure ou une estimation de la position angulaire du volant de conduite $\theta_{volant}$, une mesure ou une estimation du couple conducteur $C_{cond}$ exercé par le conducteur sur le volant de conduite, ou une mesure ou une estimation de la vitesse angulaire de rotation du volant de conduite $\dot\theta_{volant}$, et qui compare ledit paramètre de contrôle à un seuil d'alerte prédéterminé $\theta_{volant\_seuil}$, $C_{cond-seuil}$, ou $\dot\theta_{volant\_seuil}$ respectivement, afin de détecter une situation d'alerte prédéfinie, considérée comme dangereuse, et qui transmet, en cas de détection de situation d'alerte, un signal déclencheur à une unité d'intervention 22 interposée sur la branche de connexion qui relie la sortie de l'unité suiveuse 13 à l'entrée de l'unité de calcul de la consigne moteur 14, de manière à forcer la réduction voire l'annulation de la consigne d'ajustement $C_{ajust}$, de préférence par ouverture, matérielle ou virtuelle, de la branche de connexion.

Comme indiqué plus haut, la séparation des fonctions (et donc des branches) d'asservissement en trajectoire F1, 11 d'une part et de sécurisation F2, 20 d'autre part permet avantageusement un déroulement en parallèle de ces fonctions, le déroulement (normal), automatique, de chaque fonction F1, F2 pouvant ainsi être autonome et indépendant du déroulement de l'autre fonction F2, F1, et le cas échéant désynchronisé dudit déroulement de l'autre fonction F2, F1.

Cette séparation évite notamment de devoir intégrer dans la fonction d'asservissement en trajectoire F1 elle-même des signaux sécurisés ou des algorithmes sécurisés qui en ralentiraient l'exécution.

On peut ainsi réaliser une fonction d'asservissement en trajectoire F1 bon marché, performante et réactive, tout en répondant à des exigences de sécurité élevées, garanties par la présence de la fonction de sécurisation F2 qui, en cas de détection d'une situation dangereuse, dans laquelle la poursuite de l'exécution automatique de l'asservissement en trajectoire F1 pourrait menacer la sécurité du véhicule ou de ses occupants, interrompt l'effet de l'asservissement en trajectoire afin de donner la prépondérance, voire l'exclusivité, au conducteur et au pilotage manuel (et notamment aux fonctions d'assistance conventionnelles).

Avantageusement, la fonction de sécurisation F2, qui ne ralentit pas ni ne perturbe le déroulement normal de l'asservissement en trajectoire F1, tant que ledit asservissement en trajectoire est opéré dans des conditions de fonctionnement jugées satisfaisantes, peut en revanche, à tout moment utile, agir en suspendant la contribution de la fonction d'asservissement en trajectoire F1 dans le processus de définition du comportement de la direction, et plus particulièrement dans le processus de détermination de la consigne moteur $C_{mot}$, afin de ne pas laisser le pilotage automatique engager le véhicule dans une situation non contrôlable par le conducteur.

Avantageusement, la fonction de sécurisation F2, externe à la fonction d'asservissement en trajectoire F1, est donc apte à provoquer une interruption asynchrone de ladite fonction d'asservissement en trajectoire F1, soit en modérant, soit en neutralisant ladite fonction d'asservissement en trajectoire F1.

Dans l'absolu, il serait envisageable que la sous-fonction d'intervention F2-2 force simplement la modération de la fonction d'asservissement en trajectoire F1, c'est-à-dire provoque une atténuation, mais sans suppression totale, de l'effet de la consigne d'ajustement $C_{ajust}$, par exemple par une réduction forcée (à un "juste" niveau considéré comme approprié à la situation), mais sans annulation, de la valeur (absolue) de ladite consigne d'ajustement $C_{ajust}$.

Toutefois, par souci de simplicité de réalisation, de réactivité, et d'efficacité, la sous-fonction d'intervention F2-2 constituera de préférence une sous-fonction de neutralisation selon laquelle on neutralise la fonction d'asservissement en trajectoire F1 si une situation d'alerte (situation dangereuse) est détectée par la sous-fonction de diagnostic F2-1, de manière à priver la fonction d'asservissement en trajectoire F1 de toute influence sur (de toute participation à) la détermination de la consigne moteur $C_{mot}$.

En pratique, le signal déclencheur pourra donc constituer un signal de désactivation, qui commande la déconnexion de la branche d'asservissement en trajectoire 11, afin d'isoler cette dernière en interrompant la transmission de la consigne d'ajustement $C_{ajust}$.

A cet effet, l'unité d'intervention 22 peut avantageusement, tel que cela est illustré sur les figures 1 à 4, comprendre ou être formée par un interrupteur (« on/off ») actionné par le signal déclencheur.

De préférence, un tel interrupteur pourra opérer une déconnexion matérielle de la branche d'asservissement en trajectoire 11.

Le cas échéant, l'absence de consigne d'ajustement $C_{ajust}$ en entrée de l'unité de calcul de consigne moteur 14 pourra équivaloir à une annulation de ladite consigne d'ajustement. Dans ce cas, l'unité d'intervention 22 pourra, en variante, opérer une déconnexion virtuelle en forçant la mise à zéro de la consigne d'ajustement $C_{ajust}$.

On notera par ailleurs que la déconnexion, quelle que soit sa forme, n'entraîne pas nécessairement l'extinction de la fonction d'asservissement en trajectoire F1, qui peut rester active et continuer à s'exécuter et à se rafraîchir en arrière plan, de sorte à pouvoir être immédiatement opérationnelle si la disparition de la situation dangereuse amène la fonction de sécurisation F2 à commander la reconnexion de ladite fonction d'asservissement en trajectoire F1 (c'est-à-dire la reprise de service effectif du pilotage automatique).

De préférence, la fonction de sécurisation F2 présente un niveau de sécurité égal ou supérieur à ASIL-B, de préférence égal ou supérieur à ASIL-C, voire égal à ASIL-D.

La sécurisation de la branche 20 correspondante pourra être aisément obtenue d'une part en exploitant des signaux (paramètre(s) de contrôle) sécurisés déjà disponibles au sein de la direction assistée, et possédant (déjà) un niveau ASIL suffisant, c'est-à-dire égal ou supérieur au niveau visé pour la fonction de sécurisation F2, et d'autre part en utilisant pour réaliser ladite fonction de sécurisation F2, et en particulier pour les sous-fonctions de diagnostic F2-1 et d'intervention F2-2, des algorithmes qui seront sécurisés au moins au niveau ASIL global visé.

A ce titre, on notera par exemple que le couple conducteur $C_{cond}$, qui pourra avantageusement être mesuré par un capteur électromagnétique sensible aux déformations d'une barre de torsion interposée entre le volant de conduite 1 et la colonne de direction 3, est généralement disponible avec un degré de sécurité ASIL-D.

De même, la vitesse angulaire de rotation $\dot{\theta}_{volant}$ du volant de conduite pourra être évaluée avec un niveau de sécurité ASIL-D à partir de la vitesse de rotation de l'arbre du moteur d'assistance 2, elle-même mesurée à l'aide d'un capteur de vitesse intégré audit moteur d'assistance.

La position angulaire du volant de conduite $\theta_{volant}$ pourra être obtenue avec un niveau ASIL égal ou supérieur à B, et notamment égal à D, par exemple à partir d'une mesure de la position angulaire de l'arbre du moteur d'assistance 2, ou bien encore indirectement, à partir d'un calcul faisant intervenir d'autres signaux eux-mêmes sécurisés (lesdits signaux et ledit calcul possèdent eux-mêmes un niveau ASIL égal ou supérieur à celui que l'on souhaite garantir pour la position du volant de conduite que l'on cherche à déterminer), et par exemple à partir d'un calcul des efforts qui sont exercés sur le mécanisme de direction (typiquement un calcul des efforts exercés sur les biellettes ou sur la crémaillère) et qui peuvent être estimés à partir du signal sécurisé (ASIL-D) de couple conducteur $C_{cond}$ et du signal sécurisé (ASIL-D) du couple délivré par le moteur d'assistance 2.

A titre indicatif, la vitesse linéaire du véhicule $V_{véhic}$ pourra quant à elle être généralement obtenue, si nécessaire, avec un niveau de sécurité ASIL B voire C.

Les algorithmes de traitement utilisés dans la branche de sécurisation 20 seront également sécurisés à concurrence du niveau ASIL visé, étant rappelé que, quelle que soit leur complexité, et, le cas échéant, leur relative lenteur d'exécution liée à la présence de redondances ou de contrôles de sécurité, leur déroulement se fera en temps masqué par rapport à la fonction d'asservissement en trajectoire F1, et ne dégradera donc aucunement les performances de ladite fonction d'asservissement en trajectoire F1.

Le niveau de sécurité global du procédé de gestion, avantageusement égal à celui de la fonction de sécurisation F2, et garanti *in fine* par ladite fonction de sécurisation F2, pourra donc être très élevé, et répondre à un cahier des charges particulièrement exigeant.

La fonction d'asservissement en trajectoire F1 pourra quant à elle se contenter de tout niveau de sécurité librement choisi, inférieur à celui de la fonction de sécurisation F2, et par exemple présenter un niveau de sécurité ASIL-A, voir un niveau QM (« Quality Management ») très peu voire pas du tout contraignant.

Ceci autorisera notamment la réalisation pratique de ladite fonction d'asservissement en trajectoire F1 par des organes, et notamment des capteurs, simples, peu coûteux et peu encombrants, sans qu'il soit nécessaire, en particulier, que ces organes soient intrinsèquement certifiés pour un niveau ASIL donné.

Avantageusement, la combinaison, selon l'architecture proposée par l'invention, d'une fonction de sécurisation F2 particulièrement fiable et d'une fonction d'asservissement en trajectoire F1 particulièrement réactive rendra, à moindre frais, le procédé de gestion selon l'invention compatible avec la mise en oeuvre de fonctions d'aide à la conduite en situation de grande vitesse $V_{véhic}$, par exemple lorsque le véhicule circule sur autoroute.

De préférence, tel que cela est notamment illustré sur les figures 2 à 4, la sous-fonction de diagnostic F2 comporte une étape (F2-1a) d'analyse comparative, au cours de laquelle on compare la valeur instantanée du paramètre de contrôle $\theta_{volant}$, $C_{cond}$, $\dot{\theta}_{volant}$, au seuil d'alerte prédéterminé $\theta_{volant\_seuil}$, $C_{cond\_seuil}$, $\dot{\theta}_{volant\_seuiln}$, puis une étape de validation (F2-1b) au cours de laquelle on évalue, en cas de franchissement du seuil d'alerte, la durée de maintien $t_{alerte}$ pendant laquelle le paramètre de contrôle se maintient au-dessus dudit seuil d'alerte, et l'on conclut à l'apparition d'une situation d'alerte si ladite durée de maintien $t_{alerte}$ dépasse un seuil de durée $t_{seuil}$ prédéterminé, c'est-à-dire dès que $t_{alerte} \geq t_{seuil}$.

En d'autres termes, on ne déclenchera l'intervention F2-2 visant à neutraliser l'action de la fonction d'asservissement en trajectoire F1 que si la situation d'alerte, jugée dangereuse, satisfait à une double condition d'intensité (caractérisée par la valeur du paramètre de contrôle) et de durée. Ceci permettra de distinguer les véritables défauts des simples pics transitoires du paramètre de contrôle, et ainsi d'éviter tout déclenchement intempestif de la sous-fonction d'intervention F2-2 par un "faux positif".

Le chronométrage de la durée de maintien $t_{alerte}$ pourra être réalisé par tout moyen approprié, du genre horloge ou compteur 23.

De préférence, l'étape de validation (F2-1b) utilisera un compteur 23 incrémental, dont on pourra préférentiellement adapter le pas d'incrément en fonction de la vitesse de rotation $\dot{\theta}_{volant}$ du volant de conduite 1, tel que cela est illustré sur la figure 4.

Une telle disposition permettra à la fonction de sécurisation F2 de réagir plus vite lorsque le volant 1 tourne rapidement que lorsque ledit volant tourne lentement, de manière à ne pas laisser à la fonction d'asservissement en trajectoire F1, en cas de situation dangereuse, le temps de modifier significativement l'angle de braquage, et donc la trajectoire, du véhicule.

Concrètement, on pourra ainsi empêcher, par exemple, la fonction d'asservissement en trajectoire F1 de provoquer un changement de voie de circulation soudain du véhicule, avant même que le conducteur n'ait eu le temps de réagir et de reprendre le volant en mains pour s'opposer à cette action non désirée du pilotage automatique.

Bien entendu, il n'est pas exclu d'adapter, dans un but similaire de réactivité, le pas d'incrément du compteur 23 selon d'autres paramètres, tels que par exemple la vitesse longitudinale du véhicule.

A titre d'exemple non limitatif, le pas d'incrément pourra être fixé à 200 unités/ms, et le seuil de comptage à 1000 unités, de telle sorte que ledit seuil de comptage sera atteint en 5 ms (cinq millisecondes), c'est-à-dire que l'on aura un seuil de durée $t_{seuil}$ = 5 ms.

Si le pas d'incrément est porté à 1000 unités/ms, par exemple pour tenir compte d'une vitesse de rotation élevée du volant 1, le même seuil de comptage sera atteint en $t_{seuil}$ = 1 ms (une milliseconde), ce qui reviendra à abaisser le seuil de durée $t_{seuil}$ à partir duquel déclencher la sous-fonction d'intervention F2-2.

Par ailleurs, le seuil de durée $t_{seuil}$ applicable

pourra dépendre du paramètre de contrôle utilisé.

En pratique, lorsque le paramètre de contrôle utilisé est le couple conducteur (couple volant) $C_{cond}$, le seuil de durée $t_{seuil}$ pourra être, à titre indicatif, de l'ordre de 20 ms.

Lorsque le paramètre de contrôle utilisé est la vitesse angulaire de rotation du volant de conduite $\dot{\theta}_{volant}$, le seuil de durée $t_{seuil}$ pourra être, à titre indicatif, compris entre 15 ms et 500 ms (et ajusté en fonction de la valeur de la vitesse de rotation du volant, de sorte que, de préférence, le seuil de durée diminue si la vitesse de rotation du volant augmente).

Lorsque le paramètre de contrôle utilisé est la position angulaire du volant de conduite $\theta_{volant}$, le seuil de durée $t_{seuil}$ pourra être, à titre indicatif, de l'ordre de 500 ms.

De préférence, selon une caractéristique qui peut constituer une invention à part entière (quel que soit notamment le niveau ASIL de la fonction de sécurisation F2), et tel que cela est illustré sur la figure 3, la fonction de sécurisation F2 comprend une sous-fonction F2-3 de bornage permanent de couple conducteur, distincte de la sous-fonction de diagnostic F2-1 et de la sous-fonction d'intervention F2-2, et qui agit en parallèle desdites sous-fonctions de diagnostic et d'intervention, en ajustant dynamiquement un coefficient de pondération CP qu'elle applique à la fonction d'asservissement en trajectoire F1 de sorte à maintenir en permanence le couple conducteur $C_{cond}$, qui est effectivement ressenti par le conducteur au niveau du volant de conduite 1, en-deçà d'un couple conducteur maximal admissible.

Avantageusement, cette sous-fonction de bornage F2-3 permet de limiter l'ampleur, et donc les conséquences, d'une éventuelle défaillance de la fonction d'asservissement en trajectoire F1, en limitant à tout moment, quoi qu'il advienne, la consigne d'ajustement $C_{ajust}$, issue de ladite fonction d'asservissement en trajectoire F1, c'est-à-dire la consigne qui est finalement émise par la fonction d'asservissement en trajectoire F1, et qui est effectivement appliquée en entrée de l'unité de calcul de consigne moteur 14 pour être prise en considération par les lois d'assistance.

En d'autres termes, la sous-fonction de bornage F2-3 agit sur le signal de commande qui constitue la requête émise par le contrôle de position à destination des lois d'assistance et du générateur de couple moteur, en bornant, voire en réduisant l'ampleur dudit signal, par pondération.

Plus particulièrement, tel que cela est illustré sur la figure 3, le coefficient de pondération CP est appliqué à la consigne d'ajustement $C_{ajust}$ (ici formée par une consigne de couple conducteur $C_{cond\_réf}$ sur ladite figure 3) issue de l'unité suiveuse de contrôle de position 13, de telle manière que c'est une consigne d'ajustement pondérée $C_{ajust\_pond} = CP \times C_{ajust}$ (et plus particulièrement, ici, une consigne de couple conducteur pondérée $CP \times C_{cond\_réf}$) qui est appliquée, pour la mise en oeuvre des lois d'assistance, en entrée de l'unité de calcul de consigne moteur 14.

Ainsi, même dans le cas où une défaillance de la fonction d'asservissement en trajectoire F1 tendrait à générer une consigne d'ajustement anormalement élevée, la sous-fonction de bornage F2-3 permet de limiter, *in fine,* le couple conducteur $C_{cond}$ subi par le conducteur, dans la mesure où ledit couple conducteur résulte de l'application d'une consigne d'ajustement $C_{ajust}$, $C_{ajust\_pond}$ qui est elle-même bornée voire atténuée par la pondération appliquée par la sous-fonction de bornage F2-3.

En d'autres termes, grâce à la sécurité supplémentaire offerte par la sous-fonction de bornage F2-3, la fonction d'asservissement en trajectoire F1 ne peut pas provoquer d'elle-même l'apparition d'un couple conducteur $C_{cond}$ qui atteindrait ou dépasserait un seuil maximal admissible, jugé critique pour la sécurité du conducteur.

Ainsi, quelles que soient les circonstances, la fonction d'asservissement en trajectoire F1 ne sera jamais susceptible de provoquer un emballement soudain du moteur d'assistance 2.

Ceci est notamment vrai si une défaillance de ladite fonction d'asservissement en trajectoire F1 entraîne l'apparition d'une situation dangereuse, ou apparaît simultanément à une situation dangereuse. En pareil cas, la sous-fonction de bornage F2-3 est capable d'assurer (plus rapidement, le cas échéant, que les sous-fonctions de diagnostic F2-1 et d'intervention F2-2) une première protection immédiate du conducteur, notamment pendant le temps qui est nécessaire à la sous-fonction de diagnostic F2-1 pour détecter la situation dangereuse et à la sous-fonction d'intervention F2-2 pour intervenir et neutraliser la fonction (ici défaillante) d'asservissement en trajectoire F1.

La sous-fonction de bornage F2-3 complète donc avantageusement la fonction de sécurisation F2, dans la mesure où ladite sous-fonction de bornage F2-3 contribue à empêcher l'apparition d'un pic de couple conducteur $C_{cond}$, ce qui permet, le cas échéant, de disposer de plus de temps pour réagir face à une situation dangereuse, en empêchant ladite situation dangereuse de dégénérer totalement (c'est-à-dire en l'empêchant de devenir rapidement incontrôlable et/ou d'entraîner des conséquences particulièrement graves et irréversibles).

Le couple maximal admissible sera prédéterminé de telle sorte que, même lorsque le couple conducteur $C_{cond}$ atteint une telle intensité, d'une part le volant ne peut pas entraîner en force et violemment le bras du conducteur au risque de lui causer une blessure (du genre entorse), mais également, d'autre part, il reste possible au conducteur de forcer manuellement, à l'encontre de ce couple conducteur et du moteur d'assistance 2, la manoeuvre de la direction pour conserver le contrôle (manuel) du véhicule.

A titre indicatif, la valeur du couple conducteur maximal admissible pourra être choisie entre 2 N.m et 4 N.m, et par exemple de l'ordre de 3 N.m.

A cet effet, on pourra par exemple utiliser comme loi d'ajustement du coefficient de pondération CP, tel que cela est illustré sur la figure 3, une fonction qui associe la valeur CP=1 à toute valeur de couple conducteur $C_{cond}$ (mesurée) inférieure ou égale à un premier seuil bas, ici 2 N.m, la valeur CP=0 à toute valeur de couple conducteur $C_{cond}$ égale ou supérieure à un second seuil haut supérieur au premier seuil bas, ici 4 N.m, fonction qui présente une transition décroissante, de préférence linéairement, entre ces deux points caractéristiques de fonctionnement (CP = 1, $C_{cond}$ = 2 N.m) et (CP = 0, $C_{cond}$ = 4 N.m).

On notera que, dans cet exemple, en cas de défaillance tendant à provoquer un emballement de la consigne d'ajustement $C_{ajust}$, qui aurait pour effet un emballement du moteur d'assistance 2 (c'est-à-dire une croissance indésirable très rapide et de forte amplitude du couple délivré par ledit moteur d'assistance 2, et par conséquent du couple conducteur induit par l'application de ce couple moteur à l'encontre du conducteur), l'application de la loi d'ajustement du coefficient de pondération, mise en oeuvre par la sous-fonction de bornage F2-3, aura pour conséquence que la consigne d'ajustement pondérée $C_{ajust\_pond}$, et donc, le cas échéant, le moteur d'assistance 2 piloté par cette consigne, pourra osciller (à une fréquence qui sera de l'ordre de celle correspondant au temps de réponse de la sous-fonction de bornage F2-3) entre un état éteint (CP = 0), dans lequel ladite consigne d'ajustement (et éventuellement, par voie de conséquence dans certains cas, le moteur d'assistance) est placée par la pondération lorsque le couple conducteur $C_{cond}$ atteint le second seuil haut de 4 N.m, et un état allumé (CP > 0, et en particulier CP = 1) dans laquelle ladite consigne d'ajustement (et éventuellement, par voie de conséquence dans certains cas, le moteur d'assistance) revient sitôt que l'extinction précédente a eu pour effet de faire redescendre le couple conducteur $C_{cond}$ sous le premier seuil bas de 2 N.m.

En pratique, si la consigne d'ajustement $C_{ajust}$ (et, éventuellement, sous réserve des lois d'assistance applicables, le moteur d'assistance 2 lui-même) suit de la sorte un cycle de coupures et d'allumages successifs (à fréquence élevée), correspondant à l'alternance entre les deux points de fonctionnement susmentionnés, à savoir un premier point de fonctionnement avec consigne d'ajustement (pondérée) active, et moteur activé (CP = 1, car $C_{cond}$ = 2 N.m, d'où $C_{ajust\_pond}$ = $C_{ajust}$) d'une part, et un second point de fonctionnement avec consigne d'ajustement (pondérée) réduite, voire plus particulièrement inhibée, par pondération, et éventuellement moteur désactivé (CP = 0, car $C_{cond}$ = 4 N.m, d'où $C_{ajust\_pond}$ = 0) d'autre part, alors l'emballement de la consigne d'ajustement (pondérée), et donc l'emballement éventuel du moteur d'assistance 2 qui résulte de l'application de cette consigne d'ajustement, sera avantageusement contenu autour d'une valeur "pivot" correspondant à la moyenne des seuils haut et bas, soit ici 3 N.m (= 1/2 x (2 N.m + 4 N.m)).

Avantageusement, on notera que la sous-fonction de bornage F2-3 joue également un rôle avertisseur, puisqu'elle permet la perception tactile d'une défaillance, du fait que le conducteur ressent alors, à travers le volant de conduite 1 qu'il tient en mains, un couple conducteur $C_{cond}$, et donc une résistance de la direction, relativement (anormalement) élevé(e), sans pour autant que ledit couple conducteur ne puisse dépasser un seuil maximal admissible de dangerosité (4 N.m dans l'exemple susmentionné).

Selon une possibilité préférentielle de mise en oeuvre, la fonction de sécurisation F2 comporte, tel que cela est illustré sur la figure 4, une sous-fonction de filtrage adaptatif F2-4 selon laquelle on active un filtre 24 passe-bas que l'on applique au paramètre de contrôle $\theta_{volant}$, $C_{cond}$, ou, comme cela est le cas sur la figure 4, $\dot{\theta}_{volant}$, afin d'en réduire le bruit, lorsque ledit paramètre de contrôle $\dot{\theta}_{volant}$, $C_{cond}$, $\dot{\theta}_{volant}$ se trouve dans une plage de valeurs, dite « plage critique » CR (« Critical Range »), prédéfinie au voisinage du seuil d'alerte, et au contraire l'on désactive ledit filtre 24 passe-bas lorsque le paramètre de contrôle se trouve en dehors, et notamment au-delà, de ladite plage critique CR.

Les inventeurs ont en effet constaté que, lorsque le paramètre de contrôle $\dot{\theta}_{volant}$, $C_{cond}$, $\dot{\theta}_{volant}$ se trouve à proximité (notamment à proximité inférieure) du seuil d'alerte $\theta_{volant\_seuil}$, $C_{cond\_seuil}$, $\dot{\theta}_{volant\_seuil}$, le bruit qui affecte le paramètre de contrôle peut provoquer artificiellement un franchissement dudit seuil d'alerte, et ainsi fausser l'analyse comparative (F2-1a), ce qui peut conduire à diagnostiquer à tort l'apparition d'une situation dangereuse et donc à interrompre de façon injustifiée la fonction d'asservissement en trajectoire F1.

C'est pourquoi il est utile, en pareille situation, de filtrer le bruit afin de réduire la sensibilité de la sous-fonction de diagnostic F2-1 aux faux positifs, et ainsi privilégier la précision de la fonction de sécurisation F2.

En revanche, les inventeurs ont également constaté que la mise en oeuvre d'un filtrage passe-bas, destiné à éliminer le bruit (dont la fréquence est généralement élevée), retarde la mise à disposition du paramètre de contrôle (filtré) en entrée de l'unité de diagnostic 21 et ralentit ainsi l'exécution de la sous-fonction de diagnostic F2-1, et plus globalement l'exécution de la fonction de sécurisation F2.

Si un tel ralentissement (qui porte typiquement le temps de réponse de la fonction de sécurisation à 100 ms) est acceptable tant que la manoeuvre de la direction s'effectue relativement lentement, il peut en revanche être préjudiciable à la sécurité du véhicule et de ses occupants lorsque la vitesse de rotation du volant de conduite 1 est élevée (typiquement supérieure à 20 degrés/s), c'est-à-dire lorsque la situation exige une intervention rapide (typiquement avec un temps de réponse de l'ordre de 5 ms) pour éviter une modification significative de trajectoire, et notamment pour éviter un changement accidentel de voie de circulation ou une sortie de route.

C'est pourquoi l'invention propose de ne pas filtrer en permanence le paramètre de contrôle (et plus particulièrement, dans l'exemple de la figure 4, de ne pas filtrer en permanence la vitesse de rotation du volant $\dot{\theta}_{volant}$), afin de ne pas affecter la réactivité générale de la fonction de sécurisation F2, mais d'adapter le filtrage en activant sélectivement le filtre 24 passe-bas, et donc en privilégiant la précision, uniquement lorsque cela est vraiment nécessaire pour distinguer une véritable situation d'alerte d'un simple faux positif, et en désactivant ledit filtre 24 dans les autres cas, notamment en situation de rotation rapide du volant de conduite, lorsqu'il convient de privilégier avant tout la réactivité.

A cet effet, on pourra par exemple fixer la valeur haute $CR_{sup}$ de la plage critique CR comme égale (ou supérieure) au seuil d'alerte $\theta_{volant\_seuil}$, $C_{cond\_seuil}$, $\dot{\theta}_{volant\_seuil}$ majoré de la valeur prévisible (ou constatée empiriquement) du bruit BR affectant le signal du paramètre de contrôle, soit, dans l'exemple de la figure 4 : $CR_{sup} = \dot{\theta}_{volant\_seuil} + BR.$

En effet, si la valeur mesurée de la vitesse volant se situe au-delà de cette valeur haute $CR_{sup}$, on aura la certitude que, quel que soit le niveau de bruit affectant la mesure, la vitesse de volant réelle aura bel et bien dépassé le seuil d'alerte $\dot{\theta}_{volant\_seuil}$

A l'inverse, on pourrait également fixer, éventuellement, une valeur basse $CR_{inf}$ de la plage critique CR, en-deçà de laquelle on considère que le filtrage est inutile car, quelle que soit la valeur mesurée (bruitée) du paramètre de contrôle, ici de la vitesse volant, ladite valeur mesurée est, dans l'absolu ou compte tenu de son évolution à l'instant considéré, trop inférieure au seuil d'alerte $\theta_{volant\_seuil}$, $C_{cond\_seuil}$, $\dot{\theta}_{volant\_seuil}$ pour que la valeur réelle dudit paramètre de contrôle (ici la valeur réelle de la vitesse volant) ait pu atteindre ledit seuil d'alerte.

Ladite valeur basse $CR_{inf}$ pourra notamment à cet effet correspondre au Seuil d'alerte : $CR_{inf} = \theta_{volant\_seuil}$, $C_{cond\_seuil}$, $\dot{\theta}_{volant-seuil}$.

Dans l'exemple de la figure 4, on pourra ainsi avoir CR = $[CR_{inf}; CR_{sup}]$ = $[\dot{\theta}_{volant\_seuil} ; \dot{\theta}_{volant-seuil} + BR]$.

En tout état de cause, afin d'éviter les instabilités, la commutation entre l'activation et la désactivation du filtrage adaptatif pourra être réalisée par une bascule à hystérésis.

Cette bascule à hystérésis pourra utiliser comme valeur de basculement supérieure, tel que cela est illustré sur la figure 5, la valeur haute $CR_{sup}$ de la plage critique CR, de sorte à provoquer la désactivation du filtrage lorsque le paramètre de contrôle (ici la vitesse du volant), considéré(e) en valeur absolue, dépasse ladite valeur de basculement, c'est-à-dire devient supérieure à la valeur haute $CR_{sup}$.

Ladite bascule pourra également utiliser comme valeur de basculement inférieure la valeur basse $CR_{inf}$ de la plage critique CR, de sorte à provoquer la (ré)activation du filtrage lorsque le paramètre de contrôle, ici la vitesse du volant, considéré(e) en valeur absolue, redescend sous ladite valeur basse $CR_{inf}$.

A titre indicatif, et notamment dans l'exemple représenté sur la figure 4, le seuil d'alerte $\dot{\theta}_{volant\_seuil}$ pourra être fixé à 20 degrés/s.

Le bruit BR affectant le signal de mesure de la vitesse de rotation $\dot{\theta}_{volant}$) du volant 1 étant susceptible de faire fluctuer ce signal de +/-2 degrés/s à +/-3 degrés/s, un faux positif pourrait par exemple survenir, en l'absence de filtrage, à une vitesse de rotation du volant réelle de 17 degrés/s (si le bruit fausse la mesure en la majorant : 17 degrés/s réels + 3 degrés/s de bruit = 20 degrés/s mesurés, soit le seuil d'alerte).

De même, on pourrait ne pas détecter un franchissement du seuil d'alerte si la vitesse volant réelle, par exemple de 22 degrés/s, voire quasiment de 23 degrés/s, était minorée par le bruit (22 degrés/s réels - 3 degrés/s de bruit = 19 degrés/s mesurés < seuil d'alerte).

Dans cet exemple, on pourra donc choisir d'activer le filtrage (et de laisser ledit filtrage actif) tant que la vitesse de rotation du volant $\dot{\theta}_{volant}$ reste inférieure ou égale à une valeur haute $CR_{sup}$ = 23 degrés/s (= 20 degrés/s de seuil d'alerte + 3 degrés/s de bruit brut), c'est-à-dire tant que le bruit brut est susceptible de provoquer des faux positifs ou au contraire de masquer une situation dangereuse réelle.

A l'inverse, on pourra désactiver ledit filtrage lorsque l'on dépasse cette valeur haute (valeur de basculement supérieure) $CR_{sup}$ = 23 degrés/s (ou une autre valeur légèrement supérieure prédéterminée, par exemple 25 degrés/s) au-delà de laquelle, même en présence de bruit, on sera certain que la vitesse de volant réelle a de toute façon nécessairement atteint ou dépassé le seuil d'alerte (si bien qu'il est inutile de rechercher une précision élevée, et donc inutile de recourir à un filtrage).

A titre indicatif (et toujours en référence à l'utilisation de la vitesse de volant comme paramètre de contrôle et donc comme objet du filtrage), le filtrage pourra permettre d'atténuer le bruit en-deçà de 1 degré/s, ramenant ainsi la précision du diagnostic à +/- 1degré/s.

Avantageusement, la mise en oeuvre d'un filtrage adaptatif F2-4 permettra donc de combiner fiabilité et réactivité de la fonction de sécurisation F2.

Par ailleurs, de préférence, et tel que cela est illustré notamment sur les figures 2, 3 et 4, on ajuste le seuil d'alerte $\theta_{volant\_seuil}$, $C_{cond\_seuil}$, $\dot{\theta}_{volant\_seuil}$ de la fonction de sécurisation F2 selon la vitesse linéaire (longitudinale) $V_{véhic}$ du véhicule.

Ainsi, on pourra avantageusement adapter les conditions de sécurisation du procédé, et notamment de déclenchement de l'intervention F2-2, à la vitesse du véhicule, dans la mesure où il est bien compréhensible que plus la vitesse $V_{véhic}$ du véhicule est élevée, plus le temps disponible pour réagir (et notamment le temps laissé au conducteur pour réagir) est réduit, et plus les conséquences d'une défaillance (et notamment d'un changement de trajectoire ou d'une sortie de route) peuvent être graves.

En pratique, on pourra donc abaisser le seuil d'alerte $\theta_{volant\_seuil}$, $C_{cond\_seuil}$, $\dot{\theta}_{volant\_seuil}$, afin de favoriser un diagnostic précoce et une intervention rapide de la fonction de sécurisation F2, lorsque la vitesse du véhicule $V_{véhic}$ augmente et/ou dépasse un seuil de vitesse prédéterminé, ou à l'inverse augmenter le seuil d'alerte lorsque la vitesse du véhicule $V_{véhic}$ décroît et/ou se maintient en-dessous dudit seuil de vitesse prédéterminé.

Tel que cela est illustré sur les figures 2 à 4, les modifications automatiques du seuil d'alerte seront réalisées par une unité d'ajustement de seuil d'alerte 25, qui sera placée en entrée de l'unité de diagnostic 21 afin de paramétrer cette dernière en fixant le seuil d'alerte $\theta_{volant\_seuil}$, $C_{cond\_seuil}$, $\dot{\theta}_{volant\_seuil}$ applicable à l'instant considéré.

Selon une possibilité préférentielle de mise en oeuvre, qui peut constituer une invention à part entière, on ajuste le seuil d'alerte $\theta_{volant\_seuil}$, $C_{cond\_seuil}$, $\dot{\theta}_{volant\_seuil}$ de la fonction de sécurisation F2 selon le couple conducteur $C_{cond}$ exercé par le conducteur sur le volant de conduite 1, tel que cela est notamment illustré sur la figure 4.

En pratique, l'existence d'un couple conducteur $C_{cond}$ élevé indique en effet que le volant de conduite 1 est tenu en mains par le conducteur, alors que, à l'inverse, le couple conducteur $C_{cond}$ restera nécessairement faible, voire sensiblement nul, si le volant de conduite 1 est lâché et peut évoluer librement, au gré des actions du moteur d'assistance 2, sans être contrarié dans son déplacement par une action manuelle du conducteur.

Or, en situation de volant tenu, le conducteur sera plus vigilant et plus apte à réagir rapidement qu'en situation de volant lâché.

On pourra donc abaisser le seuil d'alerte $\theta_{volant\_seuil}$, $C_{cond\_seuil}$, $\dot{\theta}_{volant\_seuil}$ lorsque le volant 1 est lâché, afin d'augmenter la sensibilité de la détection d'une situation dangereuse et ainsi accélérer l'intervention de la fonction de sécurisation F2 en situation de faible vigilance du conducteur, afin que la fonction de sécurisation F2 puisse pallier ladite absence de vigilance du conducteur.

A l'inverse, on pourra tolérer une augmentation du seuil d'alerte $\theta_{volant\_seuil}$, $C_{cond\_seuil}$, $\dot{\theta}_{volant\_seuil}$ lorsque (tant que) le volant 1 est tenu, c'est-à-dire tant que le couple conducteur est supérieur à un seuil prédéterminé.

En effet, tant que le conducteur est vigilant et tient le volant en mains, le fait de réduire légèrement la sensibilité de la fonction de sécurisation F2 en augmentant le seuil d'alerte ne fera pas courir audit conducteur un risque accru de perte de la maîtrise de son véhicule, ou d'aggravation des conséquences d'une situation dangereuse, puisque ledit conducteur est en mesure à tout moment de réagir efficacement en reprenant le contrôle manuel de la direction.

Au contraire, l'augmentation du seuil d'alerte en situation de volant tenu permet d'optimiser le fonctionnement du procédé selon l'invention, en ne déclenchant l'intervention de la fonction de sécurisation F2 qu'à bon escient, selon des critères qui sont moins sévères en situation de volant tenu (la fonction de sécurisation F2 étant alors plus "permissive") qu'en situation de volant lâché, ce qui évite notamment de faire intervenir ladite fonction de sécurisation F2 alors qu'une manoeuvre est initiée intentionnellement par le conducteur et maîtrisée par ce dernier.

Dans l'exemple de la figure 4, on relèvera le seuil d'alerte de vitesse de volant $\dot{\theta}_{volant\_seuil}$ lorsque le couple conducteur $C_{cond}$ est élevé (supérieur à un seuil prédéterminé), afin de ne pas déclencher la fonction de sécurisation F2 inutilement lorsque le conducteur tient fermement le volant 1 en mains.

Ainsi, le conducteur pourra au besoin procéder à une manoeuvre de braquage rapide (donc imprimer au volant 1 une vitesse de rotation élevée) mais volontaire, par exemple pour éviter un obstacle, sans déclencher l'intervention de la fonction de sécurisation F2.

A l'inverse, on abaissera ce même seuil d'alerte de vitesse de volant $\dot{\theta}_{volant\_seuil}$ lorsque le couple conducteur $C_{cond}$ sera faible (inférieur à un seuil prédéterminé), de manière à permettre à la fonction de sécurisation F2 d'intervenir rapidement lorsqu'une rotation rapide du volant est détectée en situation de volant lâché, pour neutraliser la fonction d'asservissement en trajectoire F1.

Avantageusement, l'intervention précoce de la fonction de sécurisation F2 en situation de volant lâché stoppera la "course folle" du volant 1 et laissera au conducteur le temps de réagir et de reprendre le volant 1 en mains avant que la direction n'ait opéré automatiquement un mouvement non désiré de grande amplitude et ainsi entraîné un déplacement dangereux du véhicule, par exemple une sortie dudit véhicule de sa voie de circulation.

Selon une possibilité de mise en oeuvre préférentielle qui peut constituer une invention à part entière, applicable le cas échéant à tout procédé de gestion de direction assistée faisant intervenir la détection ou l'exploitation de l'état, tenu ou lâché, d'un volant (et/ou la gestion des transitions entre état lâché et état tenu ou inversement), la fonction de sécurisation F2 comprend, tel que cela est notamment illustré sur la figure 4, une sous-fonction de prolongation F2-5, destinée à prolonger virtuellement un état de volant tenu.

On active cette sous-fonction de prolongation F2-5 lorsque l'on perçoit une augmentation, en valeur absolue, du couple conducteur $C_{cond}$, et l'on désactive cette sous-fonction de prolongation F2-5 lorsque l'on perçoit une diminution, en valeur absolue, dudit couple conducteur $C_{cond}$.

Selon cette sous-fonction de prolongation F2-5, on retarde, lorsque ladite sous-fonction de prolongation F2-5 se trouve dans son état activé, la prise en considération de la valeur mesurée de couple conducteur $C_{cond}$ pour l'ajustement du seuil d'alerte $\theta_{volant\_seuil}$, $C_{cond\_seuil}$,

$\dot{\theta}_{volant\_seuil}$ de la fonction de sécurisation F2, de manière à retarder, pendant une durée de prolongation prédéterminée après un lâcher du volant de conduite, la modification, et plus particulièrement la réduction, dudit seuil d'alerte $\theta_{volant\_seuil}$, $C_{cond\_seuil}$, $\dot{\theta}_{volant\_seuil}$.

En effet, les inventeurs ont constaté que, à l'instant où le conducteur lâche le volant de conduite 1, il peut se produire un pic du paramètre de contrôle, et plus particulièrement un pic de vitesse de rotation du volant $\dot{\theta}_{volant}$, par exemple du fait que le conducteur, en agissant manuellement, avait éloigné le véhicule de sa trajectoire de référence si bien que, sitôt le volant lâché, la fonction d'asservissement en trajectoire F1 rappelle automatiquement et rapidement le volant 1 pour faire revenir le véhicule sur ladite trajectoire.

Par conséquent, si l'on considère immédiatement, dès l'instant où se produit le lâcher du volant, que l'on se trouve en situation de volant lâché et que l'on abaisse en conséquence le seuil d'alerte de la fonction de sécurisation F2, comme il a été dit plus haut, c'est-à-dire plus particulièrement, dans l'exemple de la figure 4, que l'on abaisse le seuil d'alerte de vitesse de rotation de volant $\dot{\theta}_{volant\_seuil}$ du fait que le couple conducteur $C_{cond}$ chute à une valeur faible, le pic du paramètre de contrôle, et plus particulièrement le pic de vitesse du volant $\dot{\theta}_{volant}$, dans ledit exemple, bien que correspondant à une situation normale et sans danger (puisque, notamment, le conducteur a encore les mains à proximité du volant et peut donc re-saisir rapidement ledit volant si nécessaire), pourra être interprété, à tort, comme une situation d'alerte, et déclencher inutilement l'intervention de la fonction de sécurisation F2.

L'invention propose donc avantageusement de filtrer le signal du couple conducteur $C_{cond}$ au moment du lâcher de volant 1 afin d'introduire un retard dans l'acquisition et/ou le traitement dudit signal et ainsi de maintenir, pendant un court laps de temps après le lâcher du volant 1 (c'est-à-dire pendant la durée de prolongation susmentionnée), la fiction d'un état de « volant tenu ».

En l'espèce, cela permettra donc de conserver provisoirement un seuil d'alerte $\theta_{volant\_seuil}$, $C_{cond\_seuil}$, $\dot{\theta}_{volant\_seuil}$ élevé, correspondant à un tel état de « volant tenu », de manière à pouvoir laisser passer le pic, normal et temporaire, de paramètre de contrôle, qui est la conséquence normale du lâcher de volant, sans déclencher l'intervention de la fonction de sécurisation F2.

En d'autres termes, la sous-fonction de prolongation F2-5 permet de différer d'une durée de prolongation (retard) prédéterminée, lors du (à compter du) lâcher du volant 1, le basculement du seuil d'alerte depuis la valeur (haute) dudit seuil d'alerte applicable en situation de volant tenu vers la valeur (basse, inférieure à la valeur haute) applicable en situation de volant lâché.

La durée de prolongation (retard) pourra notamment dépendre de l'ampleur dont le véhicule s'est éloigné de la trajectoire de référence, sous l'action du conducteur, et donc dépendre du temps qui est nécessaire pour revenir à ladite trajectoire de référence (typiquement, du temps qui est nécessaire pour revenir dans la voie de circulation).

A titre indicatif, ladite durée de prolongation pourra être sensiblement comprise entre 50 ms et 1 s, et plus particulièrement entre 50 ms et 250 ms.

Ce retard peut notamment être induit par un filtre passe-bas ou tout système retardateur (temporisateur) équivalent.

A l'inverse, lors de la reprise en main du volant, il conviendra de prendre immédiatement le changement de situation en considération, et notamment d'autoriser l'augmentation du seuil d'alerte (c'est-à-dire le retour dudit seuil d'alerte à sa valeur haute) afin de ne pas retarder la mise à jour du paramétrage de la fonction de sécurisation F2 et ainsi d'éviter tout déclenchement inutile de ladite fonction de sécurisation F2 en cas de manoeuvre manuelle intentionnelle.

Dans l'exemple de la figure 4, il s'agira de faire revenir quasi-instantanément le seuil d'alerte de vitesse de volant $\dot{\theta}_{volant\_seuil}$ à sa valeur haute, afin de ne pas déclencher la fonction de sécurisation F2 sous l'effet d'une manoeuvre de braquage manuel rapide (donc à vitesse de volant $\dot{\theta}_{volant}$ élevée) qui serait engagée volontairement par le conducteur.

En d'autres termes, la fonction de prolongation F2-5 sera donc conçue pour filtrer le couple conducteur $C_{cond}$ en cas de lâcher de volant 1, mais pas lors de la reprise en mains dudit volant 1.

En pratique, cette fonction de prolongation F2-5 pourra être mise en oeuvre au moyen d'une unité de filtrage retardateur sélectif 26, de type bascule à hystérésis, qui place (et maintient) le filtrage retardateur dans un état actif si elle perçoit que le couple conducteur $C_{cond}$ se trouve (en valeur absolue) dans une phase décroissante (signe d'un lâcher de volant) et au contraire désactive ledit filtrage retardateur lorsqu'elle perçoit que le couple conducteur est en phase croissante (signe d'une tenue en mains ou d'une reprise en mains).

Une description plus détaillée des exemples de réalisation des figures 2 à 4 et de leur fonctionnement va maintenant être fournie, afin de mieux illustrer certaines combinaisons possibles et préférées des caractéristiques décrites dans ce qui précède.

Le premier exemple, illustré sur la figure 2, correspond typiquement à une application de sécurisation dans laquelle le danger peut être associé à une dynamique latérale du véhicule (accélération latérale ou vitesse de lacet) trop élevée, typiquement à une accélération latérale supérieure ou égale à 0,3 G (0,3 fois l'accélération de pesanteur).

En effet, on comprendra par exemple qu'une fonction d'asservissement en trajectoire F1 de type suivi de voie sur autoroute (lane keeping) est prévue pour piloter le véhicule à haute vitesse linéaire $V_{véhic}$ selon des trajectoires en ligne droite ou faiblement incurvées, si bien qu'une accélération latérale importante (qui peut correspondre à un braquage soudain et de forte amplitude, par exemple) indique donc une anomalie de comportement du véhicule incompatible avec ladite fonction d'asservissement en trajectoire.

On comprendra également qu'il est préférable d'intervenir alors que l'accélération angulaire (ou la vitesse de lacet) est encore relativement faible, car le véhicule est plus facilement contrôlable lorsqu'il est (encore) en situation de dynamique latérale faible, plutôt qu'en situation d'accélération angulaire ou de vitesse de lacet élevée (typique par exemple d'un dérapage ou d'une embardée).

Avantageusement, et selon une caractéristique qui peut constituer une invention à part entière, on pourra utiliser la position angulaire du volant $\theta_{volant}$ comme paramètre de contrôle représentatif de la dynamique latérale du véhicule.

En effet il existe une relation, dite de Jeantaud-Ackermann, entre l'accélération latérale et la position du volant :

$$\theta_{volant} = K_{Jeantaud} \cdot \frac{L \cdot \gamma_{laterale}}{V_{vehic}^{2}}$$

Avec :

- $\theta_{volant}$ l'angle volant
- $K_{Jeantaud}$ le gain de conversion entre l'angle de roue et l'angle volant
- $L$ l'empattement du véhicule
- $\gamma_{laterale}$ l'accélération latérale
- $V_{vehic}$ la vitesse linéaire du véhicule

En outre, il est plus facile et plus rapide d'acquérir et de traiter (en le comparant à un seuil d'alerte de même nature) un signal qui est directement représentatif de la position du volant $\theta_{volant}$, plutôt que de prévoir un algorithme sécurisé (de même niveau ASIL, conforme au niveau exigé pour la fonction de sécurisation F2) qui permettrait de calculer en temps réel l'accélération latérale à partir dudit signal sécurisé de position de volant (mesuré) puis de comparer cette accélération latérale calculée à un seuil d'alerte d'accélération latérale.

C'est pourquoi on exécutera de préférence la fonction de sécurisation F2 en utilisant (directement) la position de volant $\theta_{volant}$ comme paramètre de contrôle, et en déterminant le seuil d'alerte $\theta_{volant\_seuil}$ sous forme d'une position de volant équivalente (au sens de la relation de Jeantaud-Ackermann, qui permet d'effectuer la conversion) à partir d'un seuil d'alerte (typiquement 0,3 G) fixé pour l'accélération latérale $\gamma_{laterale}$.

On notera à ce titre que, la formule de Jeantaud-Ackermann prenant avantageusement en considération la vitesse linéaire du véhicule, elle permettra également à l'unité d'ajustement de seuil d'alerte 25 de procéder intrinsèquement à l'adaptation du seuil d'alerte $\theta_{volant\_seuil}$ en fonction de la vitesse linéaire $V_{véhic}$ du véhicule.

On utilisera ensuite ce seuil d'alerte $\theta_{volant\_seuil}$, homogène à une position de volant, pour réaliser la sous-fonction de diagnostic F2-1, et plus particulièrement l'étape (F2-1a) de comparaison directe de la position effective de volant $\theta_{volant}$ mesurée à l'instant considéré avec ce seuil d'alerte $\theta_{volant\_seuil}$.

En cas de dépassement du seuil d'alerte, et donc de détection d'une situation dangereuse, le compteur 23 est progressivement incrémenté.

Si ledit compteur 23 dépasse le seuil de durée $t_{seuil}$ prédéterminé, confirmant (validant) ainsi l'existence d'une situation d'alerte dangereuse, un signal de désactivation est envoyé à l'unité d'intervention 22 qui neutralise la fonction d'asservissement en trajectoire F1, en interrompant le signal de consigne d'ajustement $C_{ajust}$ que ladite fonction d'asservissement en trajectoire émet à destination de l'unité de calcul de consigne moteur 14.

En d'autres termes, la fonction d'asservissement en trajectoire F1, protégée par la fonction de sécurisation F2, est ainsi déconnectée en cas de situation dangereuse.

Privée de consigne d'ajustement $C_{ajust}$ automatique (annulée par la déconnexion), l'unité de calcul de consigne de couple moteur 14 va adapter la consigne moteur $C_{mot}$ de manière à ce que l'action du moteur d'assistance 2 suive (et donc assiste) la manoeuvre manuelle du volant de conduite 1, ce qui revient à rendre au conducteur (temporairement, tant que persiste la situation d'alerte) la maîtrise du pilotage manuel de la direction.

On notera à ce titre que, dans une variante préférée de mise en oeuvre, les lois d'assistance sont conçues pour opérer un asservissement par le couple conducteur, c'est-à-dire conçues de manière à actionner le moteur d'assistance 2 de telle sorte que le couple conducteur $C_{cond}$, qui est effectivement exercé et ressenti par le conducteur, corresponde à un couple conducteur théorique qui devrait normalement être ressenti au regard de la situation dynamique du véhicule et de la position angulaire effective du volant (à l'instant considéré).

A titre d'exemple, en l'absence de consigne d'ajustement $C_{ajust}$ émanant de la fonction d'asservissement en trajectoire F1, et si le véhicule évolue en ligne droite, alors le couple conducteur $C_{cond}$ ressenti devra être sensiblement nul si le volant de conduite se trouve en position centrée. Dans ces conditions, le moteur d'assistance 2 tendra donc à agir pour faire converger ledit couple conducteur vers zéro.

Au contraire, si le véhicule évolue en virage, et que le volant est orienté dans une position angulaire non centrée (non nulle) qui correspond sensiblement à la prise de virage, alors le couple conducteur $C_{cond}$ ressenti devra être non nul, et correspondre à l'effort de braquage (d'engagement ou de maintien du braquage) "normal" des roues directrices lors de la prise de virage (typiquement de l'ordre de 3 N.m à 5 N.m). Dans ces conditions, le moteur d'assistance 2 tendra donc à agir pour faire converger ledit couple conducteur vers ledit effort de braquage "normal" non nul.

Le second exemple de réalisation, illustré sur la figure 3, correspond typiquement à la sécurisation d'une situation de vie « volant tenu », dans laquelle le conducteur tient le volant de conduite 1 en mains, et dans laquelle le danger peut provenir d'un excès de couple conducteur $C_{cond}$, qui serait induit par une consigne moteur $C_{mot}$ trop élevée, et qui serait susceptible d'entraîner le bras du conducteur contre son gré, de faire lâcher prise audit conducteur, voire d'occasionner une blessure (de type entorse du poignet) au conducteur.

A la différence du premier exemple, c'est cette fois le couple conducteur $C_{cond}$ qui sert de paramètre de contrôle, et qui est comparé, lors du diagnostic F2-1, à un seuil d'alerte de couple $C_{cond\_seuil}$, pour les raisons susmentionnées.

Néanmoins, on retrouve, dans ce second exemple, des éléments analogues à ceux du premier exemple et permettant un déroulement du procédé selon le même principe, à savoir : une unité d'ajustement de seuil d'alerte 25 qui ajuste le seuil d'alerte de couple conducteur $C_{cond\_seuil}$ en fonction de la vitesse linéaire du véhicule $V_{véhic}$, une unité de diagnostic 21 qui effectue une comparaison de la valeur instantanée du couple conducteur effectif $C_{cond}$ avec le seuil d'alerte de couple conducteur $C_{cond\_seuil}$, et un compteur incrémental 23 destiné à chronométrer la durée de maintien $t_{alerte}$ d'un franchissement du seuil d'alerte afin de valider l'existence d'une situation d'alerte.

Dans ce second exemple, on ajoute à la fonction de sécurisation F2 une sous-fonction F2-3 de bornage qui permet, comme cela a été décrit plus haut, d'appliquer une pondération (entre 0 % et 100 %, c'est-à-dire un coefficient de pondération compris entre 0 et 1) au signal à sécuriser *in fine,* à savoir ici à la consigne de couple conducteur $C_{cond\_réf}$, afin d'éviter un emballement de la consigne d'ajustement $C_{ajust}$, et donc du couple conducteur $C_{cond}$ effectivement subi par le conducteur (et plus particulièrement un emballement du moteur d'assistance 2).

Le troisième exemple de réalisation, illustré sur la figure 4, correspond typiquement à la sécurisation d'une situation de vie « volant lâché », dans laquelle le conducteur lâche le volant de conduite, et dans laquelle le danger est associé à une vitesse de rotation de volant $\dot{\theta}_{volant}$ qui serait trop rapide pour permettre au conducteur de reprendre le volant 1 en mains suffisamment à temps pour pouvoir maîtriser le comportement du véhicule.

L'objectif de la fonction de sécurisation F2 est donc d'assurer que, en cas de situation dangereuse, le volant (lâché) ira à une vitesse suffisamment lente pour laisser le temps au conducteur de réagir et donc de reprendre ledit volant en mains pour corriger manuellement le comportement du véhicule.

Le paramètre de contrôle utilisé est ici la vitesse de rotation $\dot{\theta}_{volant}$ du volant de conduite, qui pourra être calculée à partir du capteur « resolver » du moteur d'assistance 2, ou de tout autre capteur équivalent.

Ici encore, on retrouve, dans le même but que précédemment, des éléments analogues à ceux du premier et du second exemple, qui permettent le déroulement du procédé selon le même principe, à savoir : une unité d'ajustement de seuil d'alerte 25 qui ajuste le seuil d'alerte de vitesse de volant $\dot{\theta}_{volant\_seuil}$ en fonction de la vitesse linéaire du véhicule $V_{véhic}$, une unité de diagnostic 21 effectuant une comparaison de la valeur instantanée de la vitesse de rotation du volant $\dot{\theta}_{volant}$ avec le seuil d'alerte de vitesse de volant $\dot{\theta}_{volant\_seuil}$, et un compteur incrémental 23 destiné à chronométrer la durée de maintien $t_{alerte}$ d'un franchissement du seuil d'alerte afin de valider l'existence d'une situation d'alerte.

Ce troisième exemple prévoit que le seuil d'alerte, en l'espèce le seuil d'alerte de vitesse de volant $\dot{\theta}_{volant\_seuil}$, soit également ajusté en fonction du couple conducteur $C_{cond}$.

En effet, la sécurisation d'une fonction d'asservissement en trajectoire à grande vitesse et en situation de volant lâché impose un seuil d'alerte bas, privilégiant la réactivité afin d'empêcher la survenance rapide, et donc incontrôlable, de déviations de trajectoire de forte amplitude.

A l'inverse, en situation de volant tenu, le conducteur peut générer, par ses manoeuvres manuelles de braquage, des vitesses de volant supérieures à ce seuil d'alerte bas, sans pour autant que ces manoeuvres soient véritablement dangereuses. Il convient donc, en situation de volant tenu, de relever le seuil d'alerte de vitesse de volant $\dot{\theta}_{volant\_seuil}$ à une valeur haute (supérieure), de manière à ce que la protection par le seuil d'alerte bas ne s'applique, en définitive, qu'en situation de volant lâché.

En outre, le troisième exemple de réalisation inclut une sous-fonction de prolongation F2-5 qui permet de gérer efficacement les transitions entre situation de volant tenu et situation de volant lâché, en filtrant sélectivement le couple conducteur mesuré $C_{cond}$ avant d'appliquer un couple conducteur filtré à l'unité d'ajustement du seuil d'alerte 25.

Comme cela a été détaillé plus haut, ce filtrage retardateur sélectif permet de prolonger fictivement une situation de volant tenu lors du lâcher de volant, de manière à ne pas provoquer de basculement trop précoce du seuil d'alerte $\dot{\theta}_{volant\_seuil}$ vers sa valeur basse (et donc d'éviter une hypersensibilité du régime de surveillance assuré par la fonction de sécurisation F2 pendant la transition volant tenu/volant lâché), tout en autorisant à l'inverse, lors de la reprise en mains du volant, une commutation immédiate du seuil d'alerte $\dot{\theta}_{volant\_seuil}$ vers sa valeur haute afin de ne pas pénaliser la réactivité de la fonction de sécurisation en situation de volant tenu.

En pratique, l'unité d'ajustement du seuil d'alerte 25 permettra donc, tel que cela est illustré sur la figure 4, d'ajuster le seuil d'alerte de vitesse de volant $\dot{\theta}_{volant\_seuil}$ en fonction de la vitesse du véhicule et du couple conducteur filtré.

Ce troisième exemple de réalisation ajoute par ailleurs une unité d'adaptation du pas d'incrément 27 qui permet d'adapter le pas d'incrément utilisé par le compteur 23, et exprimé en unités par milliseconde, en fonction de la vitesse de rotation du volant $\dot{\theta}_{volant}$, et plus particulièrement d'augmenter ledit pas d'incrément (le cas échéant proportionnellement) avec la vitesse de rotation du volant, de manière à obtenir une réaction, et plus particulièrement une détection et une intervention, plus rapide(s) de la fonction de sécurisation F2 lorsque le volant de conduite tourne librement à vitesse élevée que lorsque ledit volant tourne librement à vitesse plus faible, et ce afin de laisser davantage de temps au conducteur pour reprendre le volant en main en neutralisant rapidement un asservissement en trajectoire défaillant, avant que ce dernier n'ait eu de graves conséquences.

Ce troisième exemple ajoute enfin une sous-fonction de filtrage adaptatif F2-4 destinée à améliorer la précision de la mesure du paramètre de contrôle, ici la vitesse de rotation du volant $\dot{\theta}_{volant}$, en débarrassant ladite mesure au moins en partie de son bruit de fond lorsque ladite mesure se trouve au voisinage du seuil d'alerte et qu'il est donc pertinent d'en affiner la précision pour éviter les erreurs de diagnostic sans pour autant compromettre la sécurité du procédé.

Avantageusement, cette même sous-fonction de filtrage adaptatif F2-4 supprime automatiquement le filtrage, afin de ne pas retarder l'exécution de la fonction de sécurisation F2, lorsque le paramètre de contrôle (la vitesse de volant) présente une valeur très supérieure au seuil d'alerte $\dot{\theta}_{volant\_seuil}$, de telle sorte que d'une part le franchissement dudit seuil d'alerte est manifeste et ne nécessite donc aucune garantie particulière de précision pour obtenir un diagnostic sûr et concluant, et que d'autre part l'ampleur de la vitesse de rotation du volant $\dot{\theta}_{volant}$ impose de privilégier la réactivité de la fonction de sécurisation (et donc de désactiver le filtrage) pour éviter de laisser dégénérer dans des proportions importantes une situation dangereuse.

En définitive, le signal de vitesse de volant dit « filtré », issu de l'unité de filtrage de bruit 24 (activée ou non, selon la situation), sera utilisé en entrée d'une part de l'unité de diagnostic 21, pour la détection du franchissement du seuil d'alerte $\dot{\theta}_{volant\_seuil}$, et d'autre part, ici, de l'unité d'adaptation du pas d'incrément 27, ce qui permettra d'optimiser, ici encore, le choix entre performance (réactivité en situation de vitesse de volant élevée) et précision (lorsque la vitesse de rotation de volant est plus faible et que l'on peut prendre davantage de temps pour diagnostiquer, avec plus de certitude, une situation dangereuse).

Bien entendu, l'invention concerne en tant que tel un module de gestion 10 d'une direction assistée, permettant la mise en oeuvre d'un procédé selon l'invention, et plus particulièrement un module de gestion 10 tel que décrit plus haut.

Ledit module de gestion 10, plus particulièrement chacune de tout ou partie de ses unités de diagnostic 21, d'intervention 22, de comptage incrémental (chronométrage) 23, de filtrage adaptatif du bruit 24, d'ajustement du seuil d'alerte 25, de filtrage retardateur sélectif 26, ou d'adaptation du pas d'incrément 27, pourra être formé(e) par un circuit électronique, une carte électronique, un calculateur (ordinateur), un automate programmable, ou tout autre dispositif équivalent.

Chacun desdits module ou unités pourra présenter une structure de commande physique, liée au câblage de ses composants électroniques, et/ou, de préférence, une structure de commande virtuelle, définie par une programmation informatique.

En outre, l'invention concerne bien entendu également un système de direction assistée comprenant un mécanisme de direction assistée piloté par un module de gestion susmentionné, et de ce fait capable de mettre en oeuvre tout ou partie du procédé selon l'invention.

L'invention concerne également un véhicule automobile, notamment à roues directrices, éventuellement motrices, équipé d'un tel système de direction assistée.

L'invention concerne enfin un support de données lisible par un ordinateur et contenant des éléments de code de programme informatique assurant l'exécution d'un procédé selon l'une quelconque des caractéristiques décrites dans ce qui précède lorsque ledit support est lu par un ordinateur.

Bien entendu, l'invention n'est par ailleurs nullement limitée aux seules variantes de réalisation décrites dans ce qui précède, l'homme du métier étant notamment à même d'isoler ou de combiner librement entre elles l'une ou l'autre des caractéristiques susmentionnées, ou encore de leur substituer des équivalents.

En particulier, on peut envisager la mise en oeuvre de plusieurs fonctions d'aide à la conduite (fonctions d'asservissement en trajectoire) distinctes, incluant par exemple une aide au suivi de voie de circulation (« lane keeping ») et/ou une aide active au stationnement (« city-park »), contrôlées chacune par une fonction de sécurisation selon l'invention (selon le principe général illustré sur la figure 1), voire toutes contrôlées par une même fonction de sécurisation commune.

**Revendications**

1. Procédé de gestion d'une direction assistée de véhicule comprenant au moins une fonction d'asservissement en trajectoire (F1), selon laquelle on ajuste automatiquement une consigne moteur ($C_{mot}$) que l'on applique à un moteur d'assistance (2) de la direction assistée de manière à ce que le véhicule suive automatiquement une trajectoire réelle qui se rapproche de, voire qui coïncide avec, une trajectoire de référence que l'on souhaite faire suivre au véhicule, ledit procédé étant **caractérisé en ce qu'**il comprend une fonction de sécurisation (F2), distincte de la fonction d'asservissement en trajectoire (F1) et qui répond à un niveau de sécurité ASIL plus élevé que ladite fonction d'asservissement en trajectoire d'après la norme de sécurité ISO-26262, ladite fonction de sécurisation (F2) comprenant une sous-fonction de diagnostic (F2-1) selon laquelle on surveille un paramètre de contrôle ($\theta_{volant}$, $C_{cond}$, $\dot{\theta}_{volant}$), représentatif du comportement du véhicule, tel qu'une mesure ou une estimation de la position angulaire du volant de conduite ($\theta_{volant}$), une mesure ou une estimation du couple conducteur exercé par le conducteur sur le volant de conduite ($C_{cond}$), ou une mesure ou une estimation de la vitesse angulaire de rotation du volant de conduite ($\dot{\theta}_{volant}$), afin de détecter, par comparaison dudit paramètre de contrôle avec un seuil d'alerte ($\theta_{volant\_seuil}$, $C_{cond\_seuil}$, $\dot{\theta}_{volant\_seuil}$) prédéterminé, l'apparition d'une situation d'alerte prédéfinie, considérée comme dangereuse, la fonction de sécurisation (F2) comprenant ensuite une sous-fonction d'intervention (F2-2) selon laquelle, en cas de détection d'une situation d'alerte, on force la modération et/ou la neutralisation de la fonction d'asservissement en trajectoire (F1).

2. Procédé selon la revendication 1 **caractérisé en ce que** la sous-fonction de diagnostic comporte une étape (F2-1a) d'analyse comparative, au cours de laquelle on compare la valeur instantanée du paramètre de contrôle ($\theta_{volant}$, $C_{cond}$, $\dot{\theta}_{volant}$) au seuil d'alerte prédéterminé ($\theta_{volant\_seuil}$, $C_{cond\_seuil}$, $\dot{\theta}_{volant\_seuil}$), puis une étape de validation (F2-1b) au cours de laquelle on évalue, en cas de franchissement du seuil d'alerte, la durée de maintien ($t_{alerte}$) pendant laquelle le paramètre de contrôle se maintient au-dessus dudit seuil d'alerte, et l'on conclut à l'apparition d'une situation d'alerte si ladite durée de maintien dépasse un seuil de durée ($t_{seuil}$) prédéterminé.

3. Procédé selon la revendication 2 **caractérisé en ce que** l'étape de validation (F2-1b) utilise un compteur (23) incrémental dont on adapte le pas d'incrément en fonction de la vitesse de rotation ($\dot{\theta}_{volant}$) du volant de conduite (1).

4. Procédé selon l'une des revendications précédentes **caractérisé en ce que** la sous-fonction d'intervention (F2-2) constitue une sous-fonction de neutralisation selon laquelle on neutralise la fonction d'asservissement en trajectoire (F1) si une situation d'alerte est détectée par la sous-fonction de diagnostic (F2-1), de manière à priver la fonction d'asservissement en trajectoire (F1) de toute influence sur la détermination de la consigne moteur ($C_{mot}$).

5. Procédé selon l'une des revendications précédentes **caractérisé en ce que** la fonction de sécurisation (F2) comprend une sous-fonction de bornage permanent (F2-3) de couple conducteur, distincte de la sous-fonction de diagnostic (F2-1) et de la sous-fonction d'intervention (F2-2), et qui agit en parallèle desdites sous-fonctions de diagnostic et d'intervention, en ajustant dynamiquement un coefficient de pondération (CP) qu'elle applique à la fonction d'asservissement de trajectoire (F1) de sorte à maintenir en permanence le couple conducteur ($C_{cond}$), qui est effectivement ressenti par le conducteur au niveau du volant de conduite, en-deçà d'un couple conducteur maximal admissible.

6. Procédé selon l'une des revendications précédentes **caractérisé en ce que** la fonction de sécurisation comporte une sous-fonction de filtrage adaptatif (F2-4) selon laquelle on active un filtre (24) passebas que l'on applique au paramètre de contrôle ($\theta_{volant}$, $C_{cond}$, $\dot{\theta}_{volant}$) afin d'en réduire le bruit, lorsque ledit paramètre de contrôle se trouve dans une plage de valeurs, dite « plage critique » (CR), prédéfinie au voisinage du seuil d'alerte, et au contraire l'on désactive ledit filtre (24) passe-bas lorsque le paramètre de contrôle se trouve en dehors, et notamment au-delà, de ladite plage critique (CR).

7. Procédé selon l'une des revendications précédentes **caractérisé en ce que** l'on ajuste le seuil d'alerte ($\theta_{volant\_seuil}$, $C_{cond\_seuil}$, $\dot{\theta}_{volant\_seuil}$) de la fonction de sécurisation (F2) selon la vitesse linéaire ($V_{véhic}$) du véhicule.

8. Procédé selon l'une des revendications précédentes **caractérisé en ce que** l'on ajuste le seuil d'alerte ($\theta_{volant\_seuil}$, $C_{cond\_seuil}$, $\dot{\theta}_{volant\_seuil}$) de la fonction de sécurisation (F2) selon le couple conducteur ($C_{cond}$) exercé par le conducteur sur le volant de conduite (1).

9. Procédé selon la revendication 8 **caractérisé en ce que** la fonction de sécurisation comprend une sous-fonction de prolongation (F2-5), destinée à prolonger virtuellement un état de volant tenu, sous-fonction de prolongation (F2-5) que l'on active lorsque l'on perçoit une augmentation, en valeur absolue, du couple conducteur ($C_{cond}$), et que l'on désactive lorsque l'on perçoit une diminution, en valeur absolue, dudit couple conducteur ($C_{cond}$), et selon laquelle on retarde, lorsque ladite sous-fonction de prolongation se trouve dans son état activé, la prise en considération de la valeur mesurée de couple conducteur ($C_{cond}$) pour l'ajustement du seuil d'alerte ($\theta_{volant\_seuil}$, $C_{cond\_seuil}$, $\dot{\theta}_{volant\_seuil}$) de la fonction de sécurisation (F2), de manière à retarder, pendant une durée de prolongation prédéterminée après un lâcher du volant de conduite (1), la modification, et plus particulièrement la réduction, dudit seuil d'alerte.

10. Module de gestion (10) d'une direction assistée comprenant une branche d'asservissement en trajectoire (11) qui comporte une unité de détermination d'une consigne de position (12) pour définir une trajectoire de référence que l'on souhaite faire suivre au véhicule, une unité suiveuse (13) qui calcule l'écart ($\Delta\theta$) entre la trajectoire réelle du véhicule et la trajectoire de référence afin d'émettre en sortie une consigne d'ajustement ($C_{ajust}$) qui est utilisée en entrée d'une unité de calcul de consigne moteur (14) qui émet à son tour une consigne moteur ($C_{mot}$) à destination d'un moteur d'assistance (2), de telle manière que la consigne d'ajustement ($C_{ajust}$) puisse être prise en considération pour ajuster la consigne moteur ($C_{mot}$) appliquée au moteur d'assistance (2) afin de réduire l'écart ($\Delta\theta$) entre la trajectoire réelle du véhicule et la trajectoire de référence, ledit module de gestion (10) étant **caractérisé en ce qu'**il comprend une branche de sécurisation (20), formant une ramification qui est distincte de la branche d'asservissement en trajectoire (11) et dont le niveau de sécurité ASIL est plus élevé que celui de ladite branche d'asservissement en trajectoire (11) d'après la norme de sécurité ISO-26262, ladite branche de sécurisation (20) comprenant une unité de diagnostic (21) qui reçoit en entrée un paramètre de contrôle ($\theta_{volant}$, $C_{cond}$, $\dot{\theta}_{volant}$), représentatif du comportement véhicule, tel qu'une mesure ou une estimation de la position angulaire du volant de conduite ($\theta_{volant}$), une mesure ou une estimation du couple conducteur exercé par le conducteur sur le volant de conduite ($C_{cond}$), ou une mesure ou une estimation de la vitesse angulaire de rotation du volant de conduite ($\dot{\theta}_{volant}$), et qui compare ledit paramètre de contrôle à un seuil d'alerte prédéterminé ($\theta_{volant\_seuil}$, $C_{cond\_seuil}$, $\dot{\theta}_{volant\_seuil}$), afin de détecter une situation d'alerte prédéfinie, considérée comme dangereuse, et qui transmet, en cas de détection de situation d'alerte, un signal déclencheur à une unité d'intervention (22) interposée sur la branche de connexion qui relie la sortie de l'unité suiveuse (13) à l'entrée de l'unité de calcul de la consigne moteur (14), de manière à forcer la réduction voire l'annulation de la consigne d'ajustement ($C_{ajust}$), de préférence par ouverture, matérielle ou virtuelle, de la branche de connexion.

11. Module de gestion (10) d'une direction assistée selon la revendication 10 **caractérisé en ce que** la branche d'asservissement en trajectoire (11) comporte une unité de détermination d'une consigne de position (12) pour définir une consigne de position ($\theta_{réf}$) de la direction à partir de la trajectoire de référence que l'on souhaite faire suivre au véhicule, une unité suiveuse (13) qui calcule l'écart ($\Delta\theta$) entre la position effective de la direction ($\theta_{mes}$) et ladite consigne de position ($\theta_{réf}$) afin d'émettre en sortie une consigne d'ajustement ($C_{ajust}$) qui est utilisée en entrée d'une unité de calcul de consigne moteur (14) qui émet à son tour une consigne moteur ($C_{mot}$) à destination d'un moteur d'assistance (2), de telle manière que la consigne d'ajustement ($C_{ajust}$) puisse être prise en considération pour ajuster la consigne moteur ($C_{mot}$) appliquée au moteur d'assistance (2) afin de réduire l'écart ($\Delta\theta$) entre la position effective de la direction et la consigne de position.

**Patentansprüche**

1. Verfahren zum Steuern einer Servolenkung eines Fahrzeugs, umfassend mindestens eine Wegansteuerungsfunktion (F1), bei der man automatisch einen Motorsollwert ($C_{mot}$) anpasst, den man auf einen Assistenzmotor (2) der Servolenkung anwendet, damit das Fahrzeug automatisch einem reellen Weg folgt, der sich einem Referenzweg, von dem man möchte, dass ihm das Fahrzeug folgt, annähert oder gar mit diesem zusammenfällt, wobei das Verfahren **dadurch gekennzeichnet ist, dass** es eine Sicherungsfunktion (F2) umfasst, die sich von der Wegansteuerungsfunktion (F1) unterscheidet, und die ein ASIL Sicherheitsniveau erfüllt, das höher ist, als die Wegansteuerungsfunktion gemäß der Sicherheitsnorm ISO-26262, wobei diese Sicherungsfunktion (F2) eine Diagnose-Unterfunktion (F2-1) umfasst, bei der man einen Kontrollparameter ($\theta_{volant}$, $C_{cond}$, $\dot{\theta}_{volant}$) überwacht, der repräsentativ für das Verhalten des Fahrzeugs ist, wie ein Messwert oder ein Schätzwert für die Winkelposition des Lenkrads ($\theta_{volant}$), ein Messwert oder ein Schätzwert des Lenkermoments, das durch den Lenker auf das Lenkrad ($C_{cond}$) ausgeübt wird, oder ein Messwert oder ein Schätzwert der Drehwinkelgeschwindigkeit des Lenkrads ($\dot{\theta}_{volant}$), um durch Vergleich des Kontrollparameters mit einem vorbestimmten Warngrenzwert ($\theta_{volant\_seuil}$, $C_{cond\_seuil}$, $\dot{\theta}_{volant\_seuil}$) das Eintreten einer vordefinierten Warnsituation zu detektieren, die als gefährlich angesehen wird, wobei die Sicherungsfunktion (F2) danach eine Interventions-Unterfunktion (F2-2) umfasst, bei der man im Falle einer Detektion einer Warnsituation die Mäßigung und/oder die Neutralisierung der Wegansteuerungsfunktion (F1) erzwingt.

2. Verfahren nach Anspruch 1, **dadurch gekennzeichnet, dass** die Diagnose-Unterfunktion einen Schritt (F2-1a) zur Vergleichsanalyse aufweist, im Laufe dessen man den augenblicklichen Wert des Kontrollparameters ($\theta_{volant}$, $C_{cond,}$ $\dot{\theta}_{volant}$) mit dem vorbestimmten Warngrenzwert ($\theta_{volant\_seuil}$, $C_{cond\_seuil}$, $\dot{\theta}_{volant\_seuil}$) vergleicht, danach einen Bestätigungsschritt (F2-1b), im Laufe dessen man beim Überschreiten der Warngrenze die Haltedauer ($t_{alerte}$) bewertet, während der sich der Kontrollparameter über diesem Warngrenzwert hält, und man auf das Eintreten einer Warnsituation folgert, wenn diese Haltedauer eine vorbestimmte Dauergrenze ($t_{seuil}$) überschreitet.

3. Verfahren nach Anspruch 2, **dadurch gekennzeichnet, dass** der Bestätigungsschritt (F2-1b) einen Inkrement-Zähler (23) verwendet, dessen Inkrement-Schritt man in Abhängigkeit von der Drehgeschwindigkeit ($\dot{\theta}_{volant}$) des Lenkrads (1) anpasst.

4. Verfahren nach einem der vorstehenden Ansprüche, **dadurch gekennzeichnet, dass** die Interventions-Unterfunktion (F2-2) eine Neutralisierungs-Unterfunktion darstellt, bei der man die Wegansteuerungsfunktion (F1) neutralisiert, wenn durch die Diagnose-Unterfunktion (F2-1) eine Warnsituation detektiert wird, um der Wegansteuerungsfunktion (F1) jedweden Einfluss auf die Bestimmung des Motorsollwerts ($C_{mot}$) zu entziehen.

5. Verfahren nach einem der vorstehenden Ansprüche, **dadurch gekennzeichnet, dass** die Sicherungsfunktion (F2) eine Unterfunktion zur permanenten Abgrenzung (F2-3) eines Lenkermoments umfasst, die sich von der Diagnose-Unterfunktion (F2-1) und von der Interventions-Unterfunktion (F2-2) unterscheidet, und die parallel zu den Diagnose- und Interventions-Unterfunktionen wirkt, indem sie dynamisch einen Gewichtungskoeffizienten (CP) anpasst, den sie auf die Wegansteuerungsfunktion (F1) anwendet, um das Lenkermoment ($C_{cond}$), welches tatsächlich vom Lenker im Bereich des Lenkrades empfunden wird, permanent unterhalb eines maximalen zulässigen Lenkermoments zu halten.

6. Verfahren nach einem der vorstehenden Ansprüche, **dadurch gekennzeichnet, dass** die Sicherungsfunktion eine Unterfunktion zur adaptiven Filterung (F2-4) aufweist, bei der man einen Tiefpassfilter (24) aktiviert, den man auf den Kontrollparameter ($\theta_{volant}$, $C_{cond}$, $\dot{\theta}_{volant}$) anwendet, um dessen Geräusch zu verringern, wenn sich der Kontrollparameter in einer vordefinierten Wertspanne, "kritische Spanne" (CR) genannt, in der Nähe des Warngrenzwerts befindet, und man im Gegensatz dazu den Tiefpassfilter (24) deaktiviert, wenn sich der Kontrollparameter außerhalb, und vor allem über dieser kritischen Spanne (CR) befindet.

7. Verfahren nach einem der vorstehenden Ansprüche, **dadurch gekennzeichnet, dass** man den Warngrenzwert ($\theta_{volant\_seuil}$, $C_{cond\_seuil}$, $\dot{\theta}_{volant\_seuil}$) der Sicherungsfunktion (F2) je nach linearer Geschwindigkeit ($V_{véhic}$) des Fahrzeugs anpasst.

8. Verfahren nach einem der vorstehenden Ansprüche, **dadurch gekennzeichnet, dass** man den Warngrenzwert ($\theta_{volant\_seuil}$, $C_{cond\_seuil}$, $\dot{\theta}_{volant\_seuil}$) der Sicherungsfunktion (F2) je nach Lenkermoment ($C_{cond}$) anpasst, das von dem Lenker auf das Lenkrad (1) ausgeübt wird.

9. Verfahren nach Anspruch 8, **dadurch gekennzeichnet, dass** die Sicherungsfunktion eine Verlängerungs-Unterfunktion (F2-5) umfasst, die dazu bestimmt ist, einen gehaltenen Lenkradzustand virtuell zu verlängern, wobei man die Verlängerungs-Unterfunktion (F2-5) aktiviert, wenn man eine Erhöhung, als absoluten Wert, des Lenkermoments ($C_{cond}$) wahrnimmt, und man sie deaktiviert, wenn man eine Verringerung, als absoluten Wert, des Lenkermoments ($C_{cond}$) wahrnimmt, und bei der man, wenn sich diese Verlängerungs-Unterfunktion in ihrem aktivierten Zustand befindet, die Berücksichtigung des Messwerts eines Lenkermoments ($C_{cond}$) zum Anpassen des Warngrenzwerts ($\theta_{volant\_seuil}$, $C_{cond\_seuil}$, $\dot{\theta}_{volant\_seuil}$) der Sicherungsfunktion (F2) verzögert, um während einer vorbestimmten Verlängerungsdauer nach einem Loslassen des Lenkrades (1) die Änderung, und im Besonderen die Verringerung dieses Warngrenzwerts zu verzögern.

10. Modul zum Steuern (10) einer Servolenkung, umfassend einen Wegansteuerungszweig (11), der eine Einheit zum Bestimmen eines Positionssollwerts (12) aufweist, um einen Referenzweg zu definieren, von dem man möchte, dass ihm das Fahrzeug folgt, eine Folgeeinheit (13), welche die Abweichung ($\Delta\theta$) zwischen dem reellen Weg des Fahrzeugs und dem Referenzweg berechnet, um am Ausgang einen Anpassungssollwert ($C_{ajust}$) auszugeben, der am Eingang einer Berechnungseinheit eines Motorsollwerts (14) verwendet wird, die ihrerseits einen Motorsollwert ($C_{mot}$) in Richtung eines Assistenzmotors (2) ausgibt, sodass der Anpassungssollwert ($C_{ajust}$) berücksichtigt werden kann, um den Motorsollwert ($C_{mot}$), der auf den Assistenzmotor (2) angewendet wird, anzupassen, um die Abweichung ($\Delta\theta$) zwischen dem reellen Weg des Fahrzeugs und dem Referenzweg zu verringern, wobei das Modul zum Steuern (10) **dadurch gekennzeichnet ist, dass** es einen Sicherungszweig (20) umfasst, der eine Verzweigung bildet, die sich von dem Wegansteuerungszweig (11) unterscheidet, dessen ASIL Sicherheitsniveau höher ist, als jenes des Wegansteuerungszweigs (11) gemäß der Sicherheitsnorm ISO-26262, wobei der Sicherungszweig (20) eine Diagnoseeinheit (21) umfasst, die am Eingang einen Kontrollparameter ($\theta_{volant}$, $C_{cond}$, $\dot{\theta}_{volant}$) empfängt, der repräsentativ für das Fahrzeugverhalten ist, wie ein Messwert oder ein Schätzwert für die Winkelposition des Lenkrads ($\theta_{volant}$), ein Messwert oder ein Schätzwert des Lenkermoments, das vom Lenker auf das Lenkrad ($C_{cond}$) ausgeübt wird, oder ein Messwert oder ein Schätzwert der Drehwinkelgeschwindigkeit des Lenkrads ($\dot{\theta}_{volant}$), und die den Kontrollparameter mit einem vorbestimmten Warngrenzwert ($\theta_{volant\_seuil}$, $C_{cond\_seuil}$, $\dot{\theta}_{volant\_seuil}$) vergleicht, um eine vordefinierte Warnsituation zu detektieren, die als gefährlich angesehen wird, und die im Falle einer Detektion einer Warnsituation ein Auslösesignal zu einer Interventionseinheit (22) überträgt, die auf dem Verbindungszweig, der den Ausgang der Folgeeinheit (13) mit dem Eingang der Berechnungseinheit des Motorsollwerts (14) verbindet, eingesetzt ist, um die Verringerung oder gar die Annullierung des Anpassungssollwerts ($C_{ajust}$), vorzugsweise durch materielles oder virtuelles Öffnen des Verbindungszweiges zu erzwingen.

11. Modul zum Steuern (10) einer Servolenkung nach Anspruch 10, **dadurch gekennzeichnet, dass** der Wegansteuerungszweig (11) eine Bestimmungseinheit für einen Positionssollwert (12) aufweist, um einen Positionssollwert ($\theta_{réf}$) der Lenkung ausgehend von dem Referenzweg, von dem man möchte, dass ihm das Fahrzeug folgt, eine Folgeeinheit (13), die die Abweichung ($\Delta\theta$) zwischen der tatsächlichen Position der Lenkung ($\theta_{mes}$) und dem Positionssollwert ($\theta_{réf}$) berechnet, um am Ausgang einen Anpassungssollwert ($C_{ajust}$) auszugeben, der am Eingang einer Berechnungseinheit eines Motorsollwerts (14) verwendet wird, die ihrerseits einen Motorsollwert ($C_{mot}$) in Richtung eines Assistenzmotors (2) ausgibt, sodass der Anpassungssollwert ($C_{ajust}$) berücksichtigt werden kann, um den Motorsollwert ($C_{mot}$), der auf den Assistenzmotor (2) angewendet wird, anzupassen, um die Abweichung ($\Delta\theta$) zwischen der tatsächlichen Position der Lenkung und dem Positionssollwert zu verringern.

## Claims

1. A method for managing a power steering of a vehicle comprising at least one path control function (F1), according to which a motor setpoint ($C_{mot}$) is automatically adjusted and applied to an assist motor (2) of the power steering so that the vehicle automatically follows an actual path which is close to, or which coincides with, a reference path that the vehicle is desired to follow, said method being **characterized in that** it comprises a securing function (F2), distinct from the path control function (F1) and which meets an ASIL safety level higher than said path control function according to the safety standard ISO-26262, said securing function (F2) comprising a diagnosis sub-function (F2-1) according to which is monitored a control parameter ($\theta_{volant}$, $C_{cond}$, $\dot{\theta}_{volant}$), representative of the behavior of the vehicle, such as a measurement or an estimate of the angular position of the steering wheel ($\theta_{volant}$), a measurement or an estimate of the driver torque exerted by the driver on the steering wheel ($C_{cond}$), or a measurement or an estimate of the angular rotational speed of the steering wheel $(\dot{\theta}_{volant})$, in order to detect, by comparison of said control parameter with a predetermined alert threshold ($\theta_{volant\_seuil}$, $C_{cond\_seuil}$, $\dot{\theta}_{volant\_seuil}$), the occurrence of a predefined alert situation, considered as dangerous, the securing function (F2) comprising afterwards an intervention sub-function (F2-2) according to which, in case of detection of an alert situation, the moderation and/or the neutralization of the path control function (F1) is forced.

2. The method according to claim 1, **characterized in that** the diagnosis sub-function includes a comparative analysis step (F2-1a), during which the instantaneous value of the control parameter ($\theta_{volant}$, $C_{cond}$, $\dot{\theta}_{volabnt}$) is compared with the predetermined alert threshold ($\theta_{volant\_seuil}$, $C_{cond\_seuil}$, $\dot{\theta}_{volant\_seuil}$), and then a validation step (F2-1b) during which is assessed, in case of a crossing of the alert threshold, the holding duration ($t_{alerte}$) during which the control parameter is kept above said alert threshold, and the occurrence of an alert situation is concluded if said holding duration exceeds a predetermined duration threshold ($t_{seuil}$).

3. The method according to claim 2, **characterized in that** the validation step (F2-1b) uses an incremental counter (23) whose increment step is adapted depending on the rotational speed $(\dot{\theta}_{volant})$ of the steering wheel (1).

4. The method according to any of the preceding claims, **characterized in that** the intervention sub-function (F2-2) constitutes a neutralization sub-function according to which the path control function (F1) is neutralized if an alert situation is detected by the diagnosis sub-function (F2-1), so as to deprive the path control function (F1) of any influence on the determination of the motor setpoint ($C_{mot}$).

5. The method according to any of the preceding claims, **characterized in that** the securing function (F2) comprises a driver torque permanent restricting sub-function (F2-3), distinct from the diagnosis sub-function (F2-1) and from the intervention sub-function (F2-2), and which acts in parallel with said diagnosis and intervention sub-functions, by dynamically adjusting a weighting coefficient (CP) that it applies to the path control function (F1) so as to permanently keep the driver torque ($C_{cond}$), which is effectively felt by the driver at the steering wheel, below an admissible maximum driver torque.

6. The method according to any of the preceding claims, **characterized in that** the securing function includes an adaptive filtering sub-function (F2-4) according to which a low-pass filter (24) is activated and applied to the control parameter ($\theta_{volant}$, $C_{cond}$,

$\dot{\theta}_{volant}$ ) in order to reduce the noise therefrom, when said control parameter is in a range of values, called « critical range » (CR), predefined in the vicinity of the alert threshold, and on the contrary, said low-pass filter (24) is deactivated when the control parameter is outside, and in particular beyond, said critical range (CR).

7. The method according to any of the preceding claims, **characterized in that** the alert threshold

($\theta_{volant\_seuil}$, $C_{cond\_seuil}$, $\dot{\theta}_{volant\_seuil}$ ) of the securing function (F2) is adjusted according to the linear speed ($V_{véhic}$) of the vehicle.

8. The method according to any of the preceding claims, **characterized in that** the alert threshold

($\theta_{volant\_seuil}$, $C_{cond\_seuil}$, $\dot{\theta}_{volant\_seuil}$ ) of the securing function (F2) is adjusted according to the driver torque ($C_{cond}$) exerted by the driver on the steering wheel (1).

9. The method according to claim 8, **characterized in that** the securing function comprises a prolongation sub-function (F2-5), intended to virtually prolong a held steering wheel state, wherein the prolongation sub-function (F2-5) is activated when an increase, in absolute value, of the driver torque ($C_{cond}$) is perceived, and is deactivated when a decrease, in absolute value, of said driver torque ($C_{cond}$) is perceived, and according to which, when said prolongation sub-function is in its activated state, taking into consideration the measured value of the drivertorque ($C_{cond}$) for adjusting the alert threshold

($\theta_{volant\_seuil}$, $C_{cond\_seuil}$, $\dot{\theta}_{volant\_seuil}$ ) of the securing function (F2) is delayed, so as to delay, for a predetermined prolongation duration after a release of the steering wheel (1), the modification, and more particularly the reduction, of said alert threshold.

10. A module (10) for managing a power steering comprising a path control branch (11) which includes a position setpoint determination unit (12) for defining a reference path that the vehicle is desired to follow, a follower unit (13) which calculates the deviation ($\Delta\theta$) between the actual path of the vehicle and the reference path in order to output an adjustment setpoint ($C_{adjust}$) which is used at the input of a motor setpoint calculation unit (14) which in turn emits a motor setpoint ($C_{mot}$) toward an assist motor (2), so that the adjustment setpoint ($C_{adjust}$) could be taken into consideration for adjusting the motor setpoint ($C_{mot}$) applied to the assist motor (2) in order to reduce the deviation ($\Delta\theta$) between the actual path of the vehicle and the reference path, said management module (10) being **characterized in that** it comprises a securing branch (20), forming a ramification which is distinct from the path control branch (11) and the ASIL safety level of which is higher than the ASIL safety level of said path control branch (11) according to the safety standard ISO-26262, said securing branch (20) comprising a diagnosis unit (21) which receives at the input a

control parameter ($\theta_{volant}$, $C_{cond}$, $\dot{\theta}_{volant}$ ), representative of the vehicle behavior, such as a measurement or an estimate of the angular position of the steering wheel ($\theta_{volant}$), a measurement or an estimate of the driver torque ($C_{cond}$) exerted by the driver on the steering wheel, or a measurement or an estimate of the angular rotational speed of the

steering wheel ($\dot{\theta}_{volant}$), and which compares said control parameter with a predetermined alert

threshold ($\theta_{volant\_seuil}$, $C_{cond\_seuil}$, $\dot{\theta}_{volant\_seuil}$ ), in order to detect a predefined alert situation, considered as dangerous, and which transmits, in case of detection of an alert situation, a trigger signal to an intervention unit (22) interposed on the connection branch which links the output of the follower unit (13) to the input of the motor setpoint calculation unit (14), so as to force the reduction or even the cancelling of the adjustment setpoint ($C_{adjust}$), prefereably by, material or virtual, opening of the connection branch.

11. The power steering management module (10) according to claim 10, **characterized in that** the path control branch (11) includes a position setpoint determination unit (12) for defining a position setpoint ($\theta_{réf}$) of the power steering from the reference path that the vehicle is desired to follow, a follower unit (13) which calculates the deviation ($\Delta\theta$) between the effective position of the steering ($\theta_{mes}$) and said position setpoint ($\theta_{réf}$) in order to output an adjustment setpoint ($C_{adjust}$) which is used at the input of a motor setpoint calculation unit (14) which in turn emits a motor setpoint ($C_{mot}$) toward an assist motor (2), so that the adjustment setpoint ($C_{adjust}$) could be taken into consideration to adjust the motor setpoint ($C_{mot}$) applied to the assist motor (2) in order to reduce the deviation ($\Delta\theta$) between the effective position of the power steering and the position setpoint.

*Fig. 1*

*Fig. 2*

*20*

*F2*

**Fonction de sécurisation**

F2 - 1

F2 - 2

Vitesse véhicule V$_{véhic}$

Ajustement du seuil d'alerte

Seuil d'alerte de couple conducteur C$_{cond\_seuil}$

25

**F2 - 1a** Comparaison C$_{cond}$ ⩾ C$_{cond\_seuil}$

Détection situation dangereuse

21

**F2 - 1b** Validation / compteur t$_{alerte}$ ⩾ t$_{seuil}$

Signal déclencheur / désactivation

23

On / Off

22

Paramètre de contrôle / Couple conducteur C$_{cond}$

Contrôle de position

13

F1 - 2

11

10

C$_{ajust}$ Consigne d'ajustement / Consigne couple conducteur

C$_{cond\_réf}$

**F2 - 3** Pondération

CP 1 0 2N.m 4N.m C$_{cond}$

Consigne d'ajustement pondérée C$_{ajust\_pond}$

Lois d'assistance

14

Sous-fonction de bornage

**Fig. 3**

25

Vitesse véhicule V$_{véhic}$

26

Couple conducteur

**F2 - 5** Prolongation

Couple conducteur filtré

Ajustement seuil d'alerte

θ̇$_{volant\_seuil}$ Seuil d'alerte vitesse volant

F2 - 1

**F2 - 1a** Comparaison θ̇$_{volant}$ ⩾ θ̇$_{volant\_seuil}$

Détection situation dangereuse

21

F2 - 2

**F2 - 1b** Validation / compteur t$_{alerte}$ ⩾ t$_{seuil}$

Signal déclencheur / désactivation

On / Off

22

23

Paramètre contrôle / Vitesse volant θ̇$_{volant}$

**F2 - 4** Filtrage adaptatif du bruit

24

Vitesse volant filtrée

Adaptation du pas d'incrément

27

Pas d'incrément

F2,20

**Fig. 4**

**Fig. 5**

Filtrage adaptatif

Actif

Inactif

CR$_{inf}$ CR$_{sup}$

Paramètre de contrôle

**RÉFÉRENCES CITÉES DANS LA DESCRIPTION**

**Documents brevets cités dans la description**

- EP 2141057 A1